# FASCICULE DE BREVET EUROPEEN

(11) **EP 0 890 748 B1**
(45) Date de publication et mention de la délivrance du brevet: **06.05.2004**
(21) Numéro de dépôt: 98440148.9
(22) Date de dépôt: 03.07.1998
(51) Int. Cl.: F15B 11/20, A01B 3/421

(54) **Dispositif de commande d'une charrue**
Steuereinrichtung für einen Pflug
Control device for a plough

(30) Priorité: 10.07.1997 FR 9708984
(43) Date de publication de la demande: 13.01.1999
(73) Titulaire: Kuhn-Huard S.A., 44142 Chateaubriant (FR)
(72) Inventeur: Cadorel, Jean-Paul, 44142 Chateaubriant (FR)
(74) Mandataire: Andres, Jean-Claude

(56) Documents cités:
- EP-A- 0 416 206
- EP-A- 0 758 718
- US-A- 4 341 148

## Description

La présente invention se rapporte à un dispositif permettant de commander deux vérins contenant chacun une première et une deuxième chambres, ledit dispositif étant conforme au préambule de la revendication 1.

On connaît un tel dispositif équipant une charrue réversible par le document **EP 0 758 718.** Ce document décrit un dispositif de retournement de charrue comportant deux vérins contenant chacun une première et une deuxième chambre. Ce dispositif comporte deux blocs en communication avec les deux vérins et un circuit comprenant un premier, un deuxième et un troisième distributeur. Ces trois distributeurs sont commandés chronologiquement en fonction des pressions qui règnent dans le circuit au moyen de conduites de commande qui prélèvent la pression en différents points dudit circuit de manière à autoriser successivement l'alimentation de la première chambre du premier vérin, la deuxième chambre du deuxième vérin, le première chambre du deuxième vérin et la deuxième chambre du premier vérin.

Ce dispositif est destiné à amener la charrue d'une position de travail dans une autre position de travail. A cet effet, il comporte trois distributeurs qui sont notamment destinés à commander le premier et le deuxième vérins de sorte que, dans un premier temps, la structure porteuse soit déplacée latéralement de manière à être rapprochée de l'axe longitudinal de l'articulation cylindrique et qu'ensuite la structure porteuse soit pivotée de 180° et que pour finir ladite structure porteuse soit à nouveau éloignée dudit axe longitudinal.

On remarquera que ce dispositif connu gère également le retour des différentes chambres des vérins de manière à autoriser ou à interdire le retour de fluide desdites chambres de sorte à respecter l'ordre de fonctionnement de la charrue tel que décrit précédemment.

Chaque distributeur est commandé de part et d'autre par une conduite de commande respective et par un élément de rappel. Chaque distributeur peut occuper deux positions : une position initiale et une autre position, ledit élément de rappel étant destiné à maintenir ou à rappeler ledit distributeur dans sa position initiale. On notera que le deuxième distributeur comporte en sus un étranglement. Cet étranglement est destiné à créer une différence de pression entre les deux conduites de commande lorsqu'il est traversé par un certain débit de fluide de manière à faire évoluer ledit distributeur de sa position initiale dans son autre position et de la maintenir dans cette autre position. Lorsqu'il n'y a plus de débit de fluide qui traverse l'étranglement, le distributeur revient dans sa position initiale sous l'effet de son élément de rappel.

On notera que lorsque la structure porteuse de la charrue a été déplacée latéralement de manière à être rapproché de l'axe longitudinal de l'articulation et que ladite structure porteuse a été pivotée de 90° comme décrit auparavant, le premier vérin est allongé alors que le deuxième vérin est raccourcit. Puis, le deuxième vérin se rallonge afin de pivoter la charrue des 90° restants. Dans ce cas de figure, le deuxième distributeur, décrit précédemment, occupe son autre position et lesdits vérins étant en fin de course, le débit au travers l'étranglement sus-cité est nul, ce qui se traduit par une pression égale dans les deux conduites de commande et donc l'élément de rappel ramène ce deuxième distributeur dans sa position initiale.

Une telle commande des vérins présente un inconvénient majeur. En effet, le premier vérin se raccourcit avant ou sensiblement en même temps que le deuxième vérin ne se soit allongé, ce qui veut dire que la structure porteuse est déplacée latéralement par rapport à la structure d'attelage de manière à s'éloigner de l'axe longitudinal de l'articulation cylindrique avant ou sensiblement en même temps que ladite structure porteuse est pivotée autour de ladite articulation cylindrique pour effectuer les 90° restants. Une telle manoeuvre ne permet pas d'amener la charrue d'une position de travail dans une autre puisque lors du déplacement latéral de la structure porteuse (dans ce cas de figure, ledit déplacement de la structure porteuse est vertical et vers le bas car ladite structure porteuse a déjà effectué une rotation de 90°) les corps de labour rentrent en interférence avec le sol et l'on risque ainsi d'endommager la charrue.

Le but de la présente invention est de remédier à l'inconvénient de ce dispositif connu et de fiabiliser son fonctionnement.

A cet effet, le dispositif selon la présente idée inventive est caractérisé selon la partie caractérisante de la revendication 1.

Grâce à ces caractéristiques le dispositif selon la présente invention permet de commander de manière fiable un vérin après l'autre et d'éviter les dysfonctionnements.

L'invention concerne également les caractéristiques suivantes considérées isolément ou dans toutes leurs combinaisons techniquement possibles :
- la première chambre du premier vérin peut uniquement être alimentée par l'intermédiaire du premier distributeur ;
- l'alimentation de la première chambre et de la deuxième chambre du deuxième vérin s'effectue notamment par l'intermédiaire du troisième distributeur ;
- l'alimentation de la deuxième chambre du premier vérin s'effectue notamment par l'intermédiaire du deuxième distributeur ;
- le troisième distributeur est alimenté par l'intermédiaire du premier distributeur ;
- chaque distributeur est destiné à occuper deux positions distinctes :
   - une position initiale ; et
   - une autre position ;
   il est en sus commandé par un élément de rappel destiné à maintenir ou à rappeler ledit distributeur dans sa position initiale ;
- chaque distributeur est commandé par trois conduites de commande, la première conduite de commande permet d'agir sur le distributeur dans le sens contraire à l'élément de rappel au moyen d'une petite surface de pilotage, la deuxième conduite de commande permet d'agir sur le distributeur dans le sens contraire à l'élément de rappel au moyen d'une grande surface de pilotage, la troisième conduite de commande permet d'agir sur le distributeur dans le même sens que l'élément de rappel au moyen d'une grande surface de pilotage ;
- lors de l'alimentation de la première chambre du premier vérin, la pression d'alimentation régnant dans cette dernière s'exerce sur la petite surface de pilotage du premier distributeur alors que la pression de retour régnant dans la deuxième chambre dudit premier vérin s'exerce sur la grande surface permettant d'agir sur ledit premier distributeur dans le même sens que l'élément de rappel correspondant ;
- la pression de retour, régnant dans la deuxième chambre du premier vérin, est supérieure à la pression de retour normale lorsque ledit premier vérin s'allonge ou se raccourcit et est obtenue au moyen d'un premier étranglement limitant le débit du fluide en provenance de ladite deuxième chambre ;
- lors de l'alimentation de la deuxième chambre du deuxième vérin, la pression d'alimentation régnant dans cette dernière s'exerce notamment sur la petite surface de pilotage du troisième distributeur alors que la pression de retour régnant dans la première chambre dudit deuxième vérin s'exerce notamment sur la grande surface de pilotage permettant d'agir sur ledit troisième distributeur dans le même sens que l'élément de rappel correspondant ;
- la pression d'alimentation régnant dans la deuxième chambre du deuxième vérin s'exerce également sur la petite surface de pilotage du premier distributeur et sur la grande surface de pilotage permettant d'agir sur ledit premier distributeur dans le sens contraire à son élément de rappel alors que la pression de retour régnant dans la première chambre dudit deuxième vérin s'exerce également sur la petite surface de pilotage du deuxième distributeur ;
- la pression de retour régnant dans la première chambre du deuxième vérin est supérieure à la pression de retour normale lorsque ledit deuxième vérin s'allonge ou se raccourcit et est obtenue au moyen d'un deuxième étranglement limitant le débit du fluide en provenance de ladite première chambre ;
- le deuxième distributeur, permettant l'alimentation de l'une des chambres du premier vérin, est commandé par le deuxième vérin ;
- lors de l'alimentation de la première chambre du deuxième vérin, la pression d'alimentation régnant dans cette dernière s'exerce notamment sur la petite surface de pilotage du deuxième distributeur alors que la pression de retour régnant dans la deuxième chambre dudit deuxième vérin s'exerce sur la grande surface de pilotage permettant d'agir sur ledit deuxième distributeur dans le même sens que l'élément de rappel correspondant ;
- la pression d'alimentation régnant dans la première chambre du deuxième vérin s'exerce également sur :
   - la petite surface de pilotage du premier distributeur ;
   - la petite surface de pilotage du troisième distributeur ;
   - la grande surface de pilotage permettant d'agir sur le premier distributeur dans le sens contraire à son élément de rappel ;
      et
   - la grande surface de pilotage permettant d'agir sur le troisième distributeur dans le sens contraire à son élément de rappel ;
- la pression de retour régnant dans la deuxième chambre du deuxième vérin est supérieure à la pression de retour normale lorsque ledit deuxième vérin s'allonge ou se raccourcit et est obtenue au moyen d'un troisième étranglement limitant le débit du fluide en provenance de ladite deuxième chambre ;
- lors de l'alimentation de la deuxième chambre du premier vérin, la pression d'alimentation régnant dans cette dernière s'exerce notamment sur la grande surface de pilotage permettant d'agir sur le deuxième distributeur dans le sens contraire à son élément de rappel ;
- la pression d'alimentation régnant dans la deuxième chambre du premier vérin s'exerce également sur :
   - la petite surface de pilotage du premier distributeur ;
   - la petite surface de pilotage du deuxième distributeur ;
   - la petite surface de pilotage du troisième distributeur ;
   - la grande surface de pilotage permettant d'agir sur le premier distributeur dans le sens contraire à son élément de rappel ;
   - la grande surface de pilotage permettant d'agir sur le troisième distributeur dans le sens contraire à son élément de rappel ;
- le deuxième bloc en communication avec le deuxième vérin est amovible du premier bloc et peut fonctionner de manière autonome ;
- il est prévu un quatrième étranglement destiné à limiter le débit du fluide en provenance de la deuxième chambre du deuxième vérin ;
- il est prévu un dispositif de sélection permettant de sélectionner le troisième étranglement ou le quatrième étranglement ;
- il est prévu un moyen permettant d'alimenter directement une des chambres du premier vérin et/ou une des chambres du deuxième vérin.

L'invention concerne également une machine agricole comportant deux vérins et un dispositif permettant de commander lesdits vérins et présentant une ou plusieurs des caractéristiques ci-dessus.

L'invention concerne encore une charrue comportant :
- une structure d'attelage destinée à être liée à un véhicule moteur ;
- une structure porteuse pouvant d'une part être pivotée autour d'une articulation d'axe longitudinal sensiblement horizontal et dirigée suivant la direction d'avance et d'autre part être déplacée latéralement par rapport à ladite structure d'attelage ;
- des corps de labour liés à la structure porteuse ;
- un premier vérin permettant de déplacer latéralement la structure porteuse par rapport à ladite structure d'attelage ;
- un deuxième vérin permettant de pivoter la structure porteuse autour de l'articulation ; et
- un dispositif permettant de commander le premier et le deuxième vérins et présentant une ou plusieurs des caractéristiques ci-dessus.

D'autres objets et caractéristiques de l'invention ressortiront de la description ci-après avec références aux dessins et schémas annexés qui représentent à titre d'exemples non limitatifs, quelques formes de réalisation du dispositif selon l'invention.

Sur ces dessins et schémas :
- la figure 1 représente une vue de dessus partielle d'une charrue selon l'invention placée dans une position de travail liée à un véhicule moteur et équipée du dispositif selon l'invention ;
- la figure 2 représente, selon une première forme de réalisation, un schéma du dispositif selon l'invention en phase de "repliage" équipant la charrue de la figure 1 ;
- la figure 3 représente le schéma du dispositif de la figure 2 en phase de "retournement, premier quart de tour" ;
- la figure 4 représente le schéma du dispositif de la figure 2 en phase de "retournement, deuxième quart de tour" ;
- la figure 5 représente le schéma du dispositif de la figure 2 en phase de "dépliage" ;
- la figure 6 représente le schéma du dispositif de la figure 2 en phase de "mise en position de travail" ;
- la figure 7 représente, selon une deuxième forme de réalisation, un schéma du dispositif selon l'invention en phase de "repliage" équipant la charrue de la figure 1 ;
- la figure 8 représente le bloc de retournement du dispositif seul en communication avec le vérin de retournement en phase de "retournement premier quart de tour" ;
- la figure 9 représente le bloc de retournement de la figure 8 en phase de "retournement deuxième quart de tour".

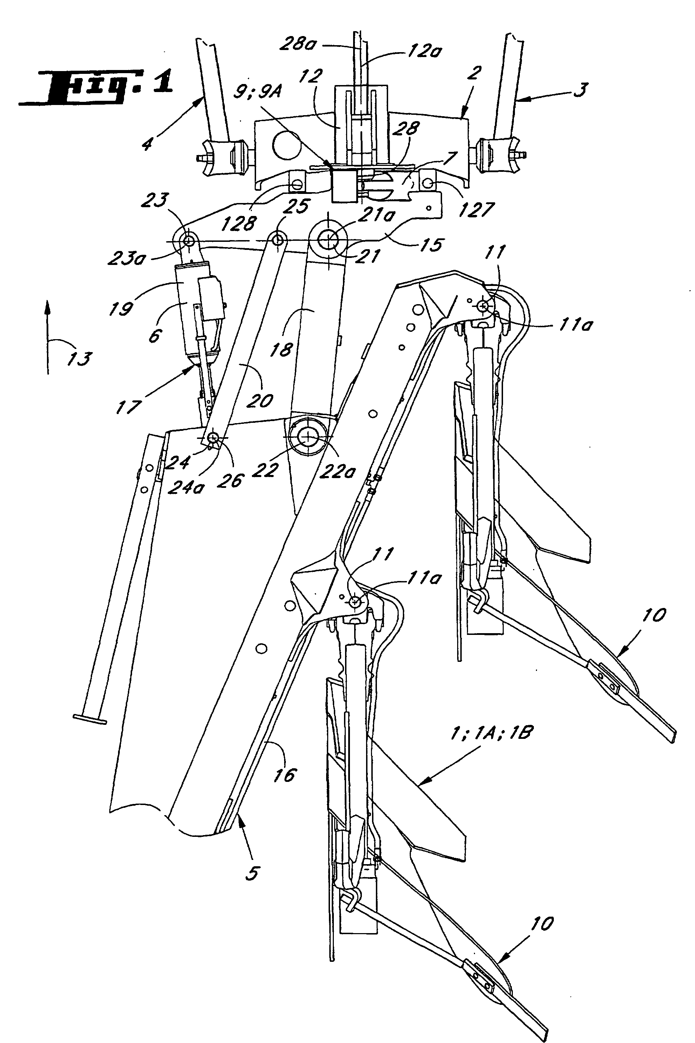

La charrue réversible (1) représentée sur la figure 1 est une charrue à largeurs multiples qui comporte dans les grandes lignes une structure d'attelage (2) liée à un dispositif d'attelage (3) d'un véhicule moteur (4), une structure porteuse (5), un premier et un deuxième vérins (6, 7) permettant de déplacer ladite structure porteuse (5) par rapport à ladite structure d'attelage (2) et un dispositif (9) permettant de commander ledit premier et ledit deuxième vérins (6, 7). A la structure porteuse (5) sont liés des corps de labour (10) au moyen d'une articulation (11) d'axe longitudinal (11a) sensiblement vertical autour duquel peut pivoter le corps de labour (10) correspondant de manière à pouvoir travailler une bande de terre de largeur différente.

La structure porteuse (5) peut d'une part être pivotée de 180° autour d'un axe longitudinal (12a) sensiblement horizontal et dirigé suivant la direction d'avance (13) et d'autre part être déplacée latéralement par rapport à ladite structure d'attelage (2). A cet effet, la structure porteuse (5) comporte une première partie (15) liée à la structure d'attelage (2) au moyen d'une articulation cylindrique (12) d'axe longitudinal (12a) décrit précédemment et une deuxième partie (16) supportant les corps de labour (10). Cette deuxième partie (16) est, selon l'exemple de réalisation représenté, liée à la première partie (15) au moyen d'un dispositif de liaison (17) comportant une bielle principale (18) et deux bielles auxiliaires (19, 20), chaque bielle étant liée à ladite première partie (15) et à ladite deuxième partie (16) au moyen d'une articulation (21, 22, 23, 24, 25, 26) respective d'axe longitudinal (21a, 22a, 23a, 24a, 25a, 26a) sensiblement vertical. On remarquera que c'est au moyen du dispositif de liaison (17) que la deuxième partie (16) de la structure porteuse (5) peut être déplacée par rapport à la première partie (15), en l'occurrence par rapport à la structure d'attelage (2). A cet effet, une des bielles auxiliaires (19) est composée du premier vérin (6) permettant de déplacer latéralement la deuxième partie (16) de la structure porteuse (5) par rapport à la première partie (15) et la structure d'attelage (2) d'une manière connue par l'homme de l'art. Ainsi, lorsque le premier vérin (6) s'allonge, la deuxième partie (16) se déplace latéralement comme décrit ci-dessus et en même temps pivote autour d'un point virtuel de manière à se rapprocher de l'axe longitudinal (12a) de l'articulation cylindrique (12) et s'étendre sensiblement dans le prolongement de la structure d'attelage (2) selon une vue de dessus.

Inversement, lorsque le premier vérin (6) raccourcit, la deuxième partie (16) s'éloigne de l'axe longitudinal (12a) de manière à s'étendre au-delà de la structure d'attelage (2). Une telle conception permet notamment de travailler une bande de terre plus ou moins large selon la position de la deuxième partie (16) de la structure porteuse (5).

Dans la suite de la description, on appellera un déplacement latéral de la deuxième partie (16) lorsque le premier vérin (6) s'allonge, le repliage de la charrue (1) et lorsque ledit premier vérin (6) raccourcit, on appellera cette opération le dépliage de la charrue (1). De même, on appellera le premier vérin (6), vérin de repliage/dépliage (6).

Le deuxième vérin (7), quant à lui, est d'une part lié à la structure d'attelage (2) au moyen d'une articulation (28) située au-dessus de l'articulation cylindrique (12) et d'axe longitudinal (28a) sensiblement parallèle à l'axe longitudinal (12a) de ladite articulation cylindrique (12) et d'autre part à la première partie (15) de la structure porteuse (5) au moyen d'une articulation (non représentée). Ce deuxième vérin (7) permet de pivoter la structure porteuse (5) de 180°, soit un demi-tour. Plus précisément, lorsque le deuxième vérin (7) raccourcit, la structure porteuse (5) pivote autour de l'axe longitudinal (12a) de 90° soit, un quart de tour, et ensuite, ledit deuxième vérin (7) se rallonge pour faire pivoter ladite structure porteuse (5) de 90° supplémentaires.

Dans la suite de la description, on appellera ce pivotement de 180° de la structure porteuse (5) le retournement, lequel est composé d'un premier quart de tour et d'un deuxième quart de tour. De même, on appellera le deuxième vérin (7) vérin de retournement.

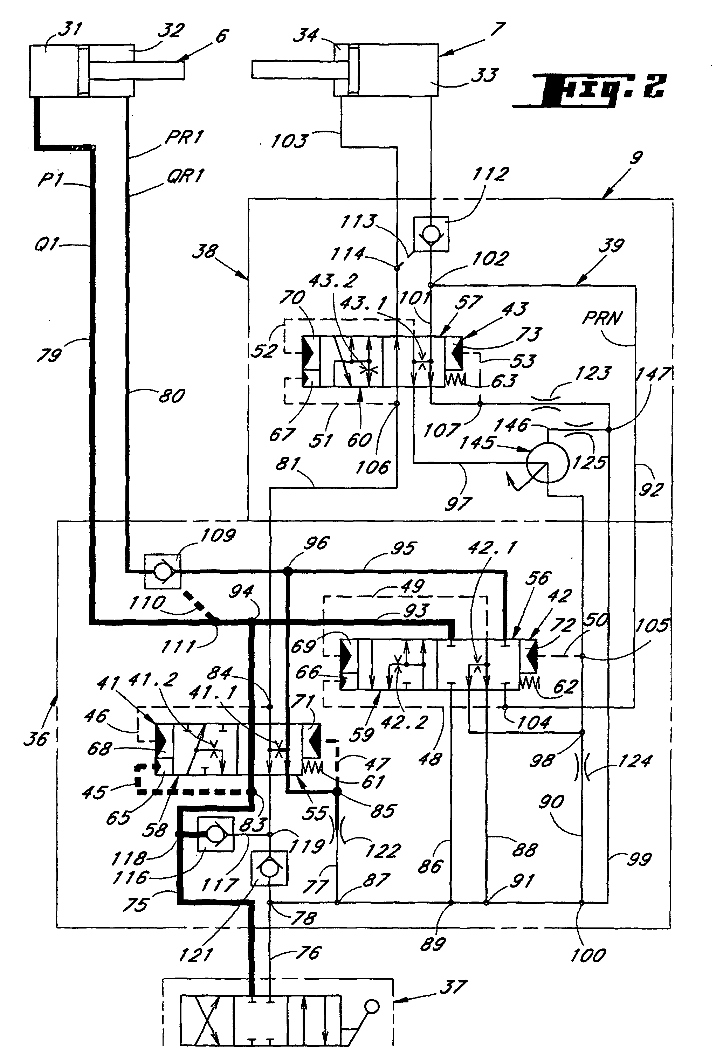

Pour assurer le retournement de la charrue (1), il faut respecter un certain ordre de commande des vérins (6, 7). Dans un premier temps, il faut que le vérin de repliage/dépliage (6) se rallonge, ensuite dans un deuxième temps, il faut que le vérin de retournement (7) se raccourcisse pour aussitôt se rallonger et pour finir le vérin de repliage/dépliage (6) se raccourcit pour revenir dans sa position initiale. A cet effet, le vérin de repliage/dépliage (6) et le vérin de retournement (7) sont des vérins double effet comportant chacun une première et une deuxième chambres (31, 32 ; 33, 34). Selon l'exemple de réalisation représenté (figures 2 à 7), on remarquera que la première chambre (31) du vérin de repliage/dépliage (6) est plus grande que la deuxième chambre (32) correspondante et la première chambre (33) du vérin de retournement (7) est plus grande que la deuxième chambre (34) correspondante.

A la lumière des figures 2 à 6, on voit que le dispositif (9) permettant de commander le vérin de repliage/dépliage (6) et le vérin de retournement (7) comporte :
- un premier bloc (36) en communication avec le vérin de repliage/dépliage (6) et une centrale hydraulique (37) appartenant au véhicule moteur (4) ;
- un deuxième bloc (38) en communication avec le vérin de retournement (7) et le premier bloc (36) ;
- un circuit (39) comprenant trois distributeurs (41, 42, 43) et des conduites de commande (45, 46, 47, 48, 49, 50, 51, 52, 53) permettant de commander lesdits distributeurs (41, 42, 43).

Les trois distributeurs (41, 42, 43) sont commandés chronologiquement en fonction des pressions qui règnent dans le circuit (39) au moyen des conduites de commandes (45, 46, 47, 48, 49, 50, 51, 52, 53) qui prélèvent la pression en différents points dudit circuit (39) de manière à autoriser successivement l'alimentation de :
- la première chambre (31) du vérin de repliage/dépliage (6) ;
- la deuxième chambre (34) du vérin de retournement (7) ;
- la première chambre (33) dudit vérin de retournement (7) ; et
- la deuxième chambre (32) dudit vérin de repliage/dépliage (6).

Une telle conception du circuit (39) permet notamment de respecter l'ordre de commande des vérins (6, 7) tel que décrit précédemment pour assurer le retournement de la charrue (1).

On remarquera que le premier et le deuxième distributeurs (41, 42) sont situés dans le premier bloc (36) alors que le troisième distributeur (43) est situé dans le deuxième bloc (38). On notera en sus que chaque distributeur (41, 42, 43) est, selon l'exemple de réalisation schématique représenté, un distributeur (41, 42, 43) à tiroirs pouvant occuper deux positions distinctes, une position initiale (55, 56, 57) et une autre position (58, 59, 60).

On remarquera que chaque distributeur (41, 42, 43) comporte en sus un élément de rappel (61, 62, 63) commandant le distributeur (41, 42, 43) correspondant. Ainsi chaque élément de rappel (61, 62, 63) est destiné à maintenir ou à rappeler le distributeur (41, 42, 43) correspondant dans sa position initiale (55,56,57).

Comme décrit précédemment, chaque distributeur (41, 42, 43) est commandé par trois conduites de commande (45, 46, 47, 48, 49, 50, 51, 52, 53). Chaque première conduite de commande (45, 48, 51) communique avec une petite surface de pilotage (65, 66, 67) destinée à agir sur le distributeur (41, 42, 43) correspondant dans le sens contraire à son élément de rappel (61, 62, 63) de manière à amener ledit distributeur (41, 42, 43) dans son autre position (58, 59, 60).

Chaque deuxième conduite de commande (46, 49, 52) communique avec une grande surface de pilotage (68, 69, 70) destinée à agir sur le distributeur (41, 42, 43) correspondant dans le sens contraire à son élément de rappel (61, 62, 63) de manière à amener ledit distributeur (41, 42, 43) dans son autre position (58, 59, 60).

Enfin, chaque troisième conduite de commande (47, 50, 53) communique avec une grande surface de pilotage (71, 72, 73) destinée à agir sur le distributeur (41, 42, 43) correspondant dans le même sens que son élément de rappel (61, 62, 63) de manière à maintenir ou à rappeler ledit distributeur (41, 42, 43) correspondant dans sa position initiale (55, 56, 57).

On notera que les deux grandes surfaces de pilotage (68, 69, 70, 71, 72, 73) destinées à agir sur chaque distributeur (41, 42, 43) correspondant sont de même dimension.

Pour assurer la mise en place dans l'une ou l'autre position (55, 56, 57, 58, 59, 60) d'un distributeur (41, 42, 43) il faut que la loi d'équilibre de ce dernier soit rompue. Cette loi d'équilibre est connue par l'homme de l'art, et est fonction des efforts qui s'appliquent de part et d'autre sur chaque distributeur (41, 42, 43). Ces efforts dépendent directement des pressions qui règnent dans les différentes conduites de commande (45, 46, 47, 48, 49, 50, 51, 52, 53) et de la dimension des surfaces de pilotage (65, 66, 67, 68, 69, 70, 71, 72, 73).

Ainsi pour amener un distributeur (41, 42, 43) de sa position initiale (55, 56, 57) dans son autre position (58, 59, 60), il faut que l'effort, engendré par les pressions qui règnent dans la première et la deuxième conduites de commande (45, 46, 48, 49, 51, 52) en complicité avec la petite et la grande surfaces de pilotage (65, 66, 67, 68, 69, 70) correspondantes, soit supérieur à l'effort engendré par l'élément de rappel (61, 62, 63) correspondant et la pression qui règne dans la troisième conduite de commande (47, 50, 53) en complicité avec la grande surface de pilotage (71, 72, 73) correspondante.

Inversement, pour amener un distributeur (41, 42, 43) de son autre position (58, 59, 60) dans sa position initiale (55, 56, 57), il faut que le premier effort cité ci-dessus soit plus faible que l'effort cité ci-dessus en second.

On notera qu'à pression égale dans la première conduite de commande (45, 48, 51) et la troisième conduite de commande (47, 50, 53) d'un même distributeur (41, 42, 43), l'effort produit par la grande surface de pilotage (71, 72, 73), en complicité avec ladite pression, est très largement supérieur à l'effort produit par la petite surface de pilotage (65, 66, 67) en complicité avec ladite pression.

En d'autres termes, une faible pression dans la troisième conduite de commande (47, 50, 53) suffit amplement pour ramener ou pour maintenir le distributeur (41, 42, 43) dans sa position initiale même si la pression de la première conduite de commande (45, 48, 51) est au maximum (dans les limites d'exploitation du dispositif (9) et/ou de la centrale hydraulique (37)).

On notera encore que chaque distributeur (41, 42, 43) comporte un moyen permettant de faire communiquer les différentes surfaces de pilotage (65, 66, 67, 68, 69, 70, 71, 72, 73) d'un même distributeur (41, 42, 43) entre elles de manière à ramener automatiquement ledit distributeur (41, 42, 43) dans sa position initiale (55, 56, 57) lorsque le dispositif (9) est au repos.

Pour ce faire, chaque tiroir d'un distributeur (41, 42, 43) peut être doté d'un trou calibré s'étendant longitudinalement au travers dudit tiroir de manière à faire communiquer les différentes surfaces de pilotage (65, 66, 67, 68, 69, 70, 71, 72, 73) correspondantes entre elles. A cet effet, selon l'exemple de réalisation schématique représenté, chaque trou calibré est représenté par deux étranglements (41.1, 41.2, 42.1, 42.2, 43.1, 43.2), permettant le passage du fluide à très faible débit des surfaces de pilotage (65, 66, 67, 68, 69, 70), situés d'un côté d'un distributeur (41, 42, 43) vers la surface de pilotage (71, 72, 73) correspondante située de l'autre côté dudit distributeur (41, 42, 43) correspondant. Ce passage du fluide à très faible débit n'a de signification qu'en statique. Lorsqu'une des surfaces de pilotage (65, 66, 67, 68, 69, 70, 71, 72, 73) est alimentée en fluide en provenance d'une chambre (31, 32, 33, 34) d'un vérin (6, 7) ou de la centrale hydraulique (37), ce passage du fluide à très faible débit est négligeable.

On remarquera encore que le premier et le troisième distributeurs (41, 43) comportent chacun six orifices alors que le deuxième distributeur (42) comporte sept orifices, chaque orifice recevant une conduite.

A cet effet, le premier distributeur (41) communique avec :
- la centrale hydraulique (37) du véhicule moteur (4) au moyen d'une première et d'une deuxième conduites (75, 76) ;
- ladite deuxième conduite (76) au moyen d'une troisième conduite (77) parallèle raccordée à ladite deuxième conduite (76) en un premier point de raccordement (78) ;
- la première chambre (31) du vérin de repliage/dépliage (6) au moyen d'une quatrième conduite (79) ;
- la deuxième chambre (32) dudit vérin de repliage/dépliage (6) au moyen d'une cinquième conduite (80) ;
- le troisième distributeur (43) au moyen d'une sixième conduite (81).

Les conduites de commande (45, 46, 47) commandant le premier distributeur sont agencées comme suit :
- la première conduite de commande (45) communique en sus avec la première conduite (75) à laquelle elle est raccordée en un deuxième point de raccordement (83) ;
- la deuxième conduite de commande (46) communique en sus avec la sixième conduite (81) à laquelle elle est raccordée en un troisième point de raccordement (84) ; et
- la troisième conduite de commande (47) communique en sus avec la troisième conduite (77) à laquelle elle est raccordée en un quatrième point de raccordement (85).

Le deuxième distributeur (42) communique quant à lui avec :
- la troisième conduite (77) au moyen d'une septième conduite (86) raccordée à ladite troisième conduite (77) en un cinquième point de raccordement (87) ;
- la septième conduite (86) au moyen d'une huitième conduite (88) parallèle raccordée à ladite septième conduite (86) en un sixième point de raccordement (89) ;
- la huitième conduite (88) au moyen d'une neuvième conduite (90) parallèle raccordée à ladite huitième conduite (88) en un septième point de raccordement (91) ;
- la première chambre (33) du vérin de retournement (7) au moyen d'une dixième conduite (92) ;
- la quatrième conduite (79) au moyen d'une onzième conduite (93) raccordée à ladite quatrième conduite (79) en un huitième point de raccordement (94) ;
- la cinquième conduite (80) au moyen d'une douzième conduite (95) raccordée à ladite cinquième conduite (80) en un neuvième point de raccordement (96) ;
- la grande surface de pilotage (69) au moyen de la deuxième conduite de commande (49) permettant de commander ledit deuxième distributeur (42).

Le troisième distributeur (43) communique avec :
- le premier distributeur (41) au moyen de la sixième conduite (81) comme décrit précédemment ;
- la neuvième conduite (90) au moyen d'une treizième conduite (97) raccordée à ladite neuvième conduite (90) en un dixième point de raccordement (98) ;
- la neuvième conduite (90) au moyen d'une quatorzième conduite (99) raccordée à ladite neuvième conduite (90) en un onzième point de raccordement (100) ;
- la dixième conduite (92) au moyen d'une quinzième conduite (101) raccordée à ladite dixième conduite (92) en un douzième point de raccordement (102).
- la deuxième chambre (34) du vérin de retournement (7) au moyen d'une seizième conduite (103) ;
- la grande surface de pilotage (70) au moyen de la deuxième conduite de commande (52) permettant de commander ledit troisième distributeur (43).

Les conduites de commande (48, 49, 50) commandant le deuxième distributeur (42) sont agencées comme suit :
- la première conduite de commande (48) communique en sus avec la dixième conduite (92) à laquelle elle est raccordée en un treizième point de raccordement (104) ;
- la deuxième conduite de commande (49) communique avec un des sept orifices dudit deuxième distributeur (42) comme décrit précédemment ;
- la troisième conduite de commande (50) communique en sus avec la treizième conduite (97) à laquelle elle est raccordée en un quatorzième point de raccordement (105).

Les conduites de commande (51, 52, 53) commandant le troisième distributeur (43) sont agencées quant à elles comme suit :
- la première conduite de commande (51) communique en sus avec la sixième conduite (81) à laquelle elle est raccordée en un quinzième point de raccordement (106) ;
- la deuxième conduite de commande (52) communique avec un des six orifices dudit troisième distributeur (43) comme décrit précédemment ;
- la troisième conduite de commande (53) communique en sus avec la quatorzième conduite (99) à laquelle elle est raccordée en un seizième point de raccordement (107).

A la lumière des figures 2 à 6, on voit encore qu'il est prévu un premier clapet anti-retour (109) situé sur la cinquième conduite (80) entre la deuxième chambre (32) du vérin de repliage/dépliage (6) et le neuvième point de raccordement (96). Ce premier clapet anti-retour (109) peut être commandé par la pression qui règne dans la quatrième conduite (79) au moyen d'une conduite de commande supplémentaire (110) raccordée à ladite quatrième conduite (79) au moyen d'un dix-septième point de raccordement (111). Ce premier clapet anti-retour (109) est destiné à autoriser, lorsqu'il n'est pas commandé, uniquement le passage du fluide en provenance du neuvième point de raccordement (96) vers la deuxième chambre (32). Lorsque ledit premier clapet anti-retour (109) est commandé, il autorise le passage du fluide dans les deux sens.

Il est en outre prévu un deuxième clapet anti-retour (112) situé sur la dixième conduite (92) entre la première chambre (33) du vérin de retournement (7) et le douzième point de raccordement (102). Ce deuxième clapet anti-retour (112) peut être commandé par la pression qui règne dans la seizième conduite (103) au moyen d'une autre conduite de commande supplémentaire (113) raccordée à ladite seizième conduite (103) au moyen d'un dix-huitième point de raccordement (114). Ce deuxième clapet anti-retour (112) est destiné à autoriser, lorsqu'il n'est pas commandé, uniquement le passage du fluide en provenance du douzième point de raccordement (102) vers la première chambre (33). Lorsque ledit deuxième clapet anti-retour (112) est commandé, il autorise le passage du fluide dans les deux sens.

Ces deux clapets anti-retour (109, 112) permettent notamment d'assurer la position statique des deux vérins (6, 7) lors du travail (lorsque aucune de leur chambre (31, 32, 33, 34) n'est alimentée). Ainsi le premier clapet anti-retour (109) interdit au vérin de repliage/dépliage (6) de s'allonger et le deuxième clapet anti-retour (112) interdit au vérin de retournement de se raccourcir.

On voit encore qu'il est également prévu un troisième clapet anti-retour (116) situé sur une dix-septième conduite (117) raccordant la première et la deuxième conduites (75, 76). A cet effet, la dix-septième conduite (117) est raccordée à la première conduite (75) au moyen d'un dix-neuvième point de raccordement (118) et à la deuxième conduite (76) au moyen d'un vingtième point de raccordement (119). Ce troisième clapet anti-retour (116) autorise le passage du fluide de la deuxième conduite (76) vers la première conduite (75) mais interdit le passage du fluide dans le sens inverse.

Il est encore prévu un quatrième clapet anti-retour (121) situé sur la deuxième conduite (76) entre le premier point de raccordement (78) et le vingtième point de raccordement (119). Ce quatrième clapet anti-retour (121) autorise le passage du fluide en provenance du premier distributeur (41) vers la centrale hydraulique (37) ou vers la troisième conduite (77) mais il interdit le passage du fluide dans le sens inverse.

Ce troisième et ce quatrième clapets anti-retour (116, 121) forment un moyen permettant d'alimenter directement une des chambres (31, 32) du vérin de repliage/dépliage (6) et une des chambres (33, 34) du vérin de retournement (7) comme cela va être décrit ultérieurement.

A la lumière des figures 1 à 6, on voit encore qu'il est prévu une pluralité d'étranglements (122, 123, 124, 125) montés chacun sur une. conduite. Chaque étranglement (122, 123, 124, 125) est destiné à limiter le débit du fluide qui est véhiculé dans ladite canalisation correspondante et à créer de ce fait une pression en amont dudit étranglement (122, 123, 124, 125) supérieure à la pression en aval dudit étranglement (122, 123, 124, 125). Lorsque le fluide, dans la canalisation concernée, est statique, c'est-à-dire que le débit est nul, la pression régnant de chaque côté de l'étranglement (122, 123, 124, 125) correspondant est identique.

Un premier étranglement (122) est situé sur la troisième conduite (77) et est destiné à limiter le débit du fluide en provenance de la deuxième chambre (32) du vérin de repliage/dépliage (6) et à créer une certaine pression dans la troisième conduite de commande (47) commandant le premier distributeur (41).

Un deuxième étranglement (123) est situé sur la quatorzième conduite (99) et est destiné à limiter le débit du fluide en provenance de la première chambre (33) du vérin de retournement (7) et à créer une certaine pression dans la troisième conduite de commande (53) commandant le troisième distributeur (43).

Un troisième étranglement (124) est situé sur la neuvième conduite (90) et est destiné à limiter le débit du fluide en provenance de la deuxième chambre (34) du vérin de retournement (7) et à créer une certaine pression dans la troisième conduite de commande (50) commandant le deuxième distributeur (42).

Cette charrue (1) équipée du dispositif (9) fonctionne de la manière suivante.

Dans un premier temps, l'opérateur lie la charrue (1) au véhicule moteur (4) en faisant notamment communiquer la centrale hydraulique (37) dudit véhicule moteur (4) avec le dispositif (9) au moyen de la première conduite (75) et de la deuxième conduite (76).

La charrue (1) est dans une de ces positions de travail de sorte à pouvoir travailler par exemple une bande de terre de largeur moyenne.

Dans ce cas de figure, le vérin de repliage/dépliage (6) est allongé à moitié et le vérin de retournement (7) est allongé au maximum (figure 2).

Lorsque l'opérateur souhaite amener la charrue (1) dans l'autre position de travail, l'opérateur actionne la centrale hydraulique (37) de manière à autoriser l'alimentation en fluide du dispositif (9) par l'intermédiaire de la première conduite (75). On notera que tout au long de cette opération de retournement de la charrue (1) pour l'amener dans son autre position de travail, l'opérateur maintient son action sur la centrale hydraulique (37) telle que décrite ci-dessus.

A ce fluide, en provenance de la centrale hydraulique (37), correspond une pression d'alimentation (P1) et un débit d'arrivée (Q1) qui dépendent de ladite centrale hydraulique et lesquels sont représentés en traits épais sur la figure 2.

Ce fluide en provenance de la centrale hydraulique (37) passe :
- dans la première conduite (75) ;
- dans une partie de la dix-septième conduite (117) jusqu'au troisième clapet anti-retour (116) ;
- dans la première conduite de commande (45) commandant le premier distributeur (41) ;
- par le premier distributeur (41) qui occupe, dans ce cas de figure, sa position initiale (55) et qui autorise le passage dudit fluide vers la quatrième conduite (79) ;
- dans la quatrième conduite (79) ;
- dans la onzième conduite (93) à l'issue de laquelle il est bloqué par le deuxième distributeur (42) qui occupe dans ce cas de figure sa position initiale (56) ;
- dans la conduite de commande supplémentaire (110) qui commande le premier clapet anti-retour (109) ; et
- dans la première chambre (31) du vérin de repliage/dépliage (6).

On remarquera que la première chambre (31) du vérin de repliage/dépliage (6) peut uniquement être alimenté par l'intermédiaire du premier distributeur (41).

Lorsque ce fluide, en provenance de la centrale hydraulique (37), pénètre dans la première chambre (31), le vérin de repliage/dépliage (6) s'allonge ce qui permet de replier la charrue (1) tel que décrit précédemment.

A cet effet, le fluide contenu dans la deuxième chambre (32) du vérin de repliage/dépliage (6) est chassé de cette dernière et passe :
- dans la cinquième conduite (80) ;
- par le premier clapet anti-retour (109) qui est commandé ;
- dans la douzième conduite (95) à l'issue de laquelle il est bloqué par le deuxième distributeur (42) qui occupe toujours sa position initiale (56) ;
- par le premier distributeur (41) qui autorise le passage dudit fluide vers la troisième conduite (77) ;
- dans ladite troisième conduite (77) ;
- dans la troisième conduite de commande (47) commandant ledit premier distributeur (41) ;
- par le premier étranglement (122) ; et
- dans la deuxième conduite (76) pour finir dans la centrale hydraulique (37).

A ce fluide en provenance de la deuxième chambre (32) du vérin de repliage/dépliage (6) correspond une première pression de retour (PR1) et un premier débit de retour (QR1) lesquels sont représentés en traits d'épaisseur moyenne sur la figure 2.

Au fluide s'étendant dans les canalisations, représentées en traits fins, correspond une pression de retour normale (PRN) qui, aux pertes de charges près, égale à la pression qui règne dans le réservoir (non représenté) de la centrale hydraulique (37) et est sensiblement nulle.

Lorsque le vérin de repliage/dépliage (6) s'allonge, le premier étranglement (122) limite le débit du fluide en provenance de la deuxième chambre (32) dudit vérin de repliage/dépliage (6) et crée de ce fait le premier débit de retour (QR1), ce qui a pour effet de créer, en amont dudit premier étranglement (122), la première pression de retour (PR1) qui est supérieure à la pression de retour normale (PRN). Cette première pression de retour (PR1) s'applique notamment sur la grande surface de pilotage (71) agissant sur le premier distributeur (41) alors que la pression d'alimentation (P1) s'applique notamment sur la petite surface de pilotage (65) agissant sur ledit premier distributeur (41).

Lors de cet allongement du vérin de repliage/dépliage (6), la pression d'alimentation (P1) est supérieure à la première pression de retour (PR1) mais la loi d'équilibre du premier distributeur (41) n'est pas rompue pour des raisons qui ont été amplement développées précédemment.

On remarquera encore que lors de l'allongement du vérin de repliage/dépliage (6), le deuxième et le troisième distributeurs (42, 43) sont commandés par les conduites de commande (48, 49, 50, 51, 52, 53) correspondantes à l'intérieur desquelles règne la pression de retour normale (PRN) ce qui permet de maintenir lesdits distributeurs (42, 43) dans leurs positions initiales (56, 57) sous l'effet de leurs éléments de rappel (62, 63) respectifs.

En fin de course du vérin de repliage/dépliage (6), le premier débit de retour (QR1) devient nul et donc la pression régnant de chaque côté du premier étranglement (122) devient égale c'est-à-dire nulle.

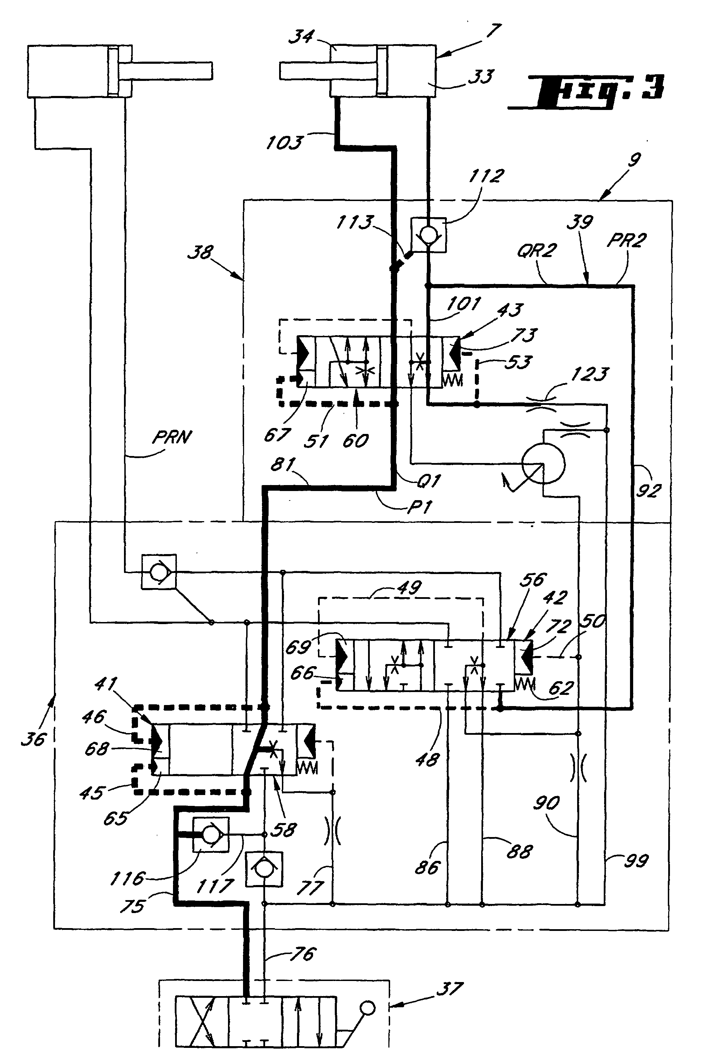

Dès cet instant, la loi d'équilibre du premier distributeur (41) est rompue puisqu'il n'y a plus que la première conduite de commande (45) qui commande ledit premier distributeur (41). A cet effet, le premier distributeur (41) est amené dans son autre position (58) tel que représenté sur la figure 3.

Le fluide en provenance de la centrale hydraulique (37) passe maintenant :
- dans la première conduite (75) ;
- dans une partie de la dix-septième conduite (117) jusqu'au troisième clapet anti-retour (116) ;
- dans la première conduite de commande (45) commandant le premier distributeur (41) ;
- par ledit premier distributeur (41) qui autorise dans ce cas de figure uniquement le passage dudit fluide vers la sixième conduite (81) ;
- dans la deuxième conduite de commande (46) commandant ledit premier distributeur (4 1 ) ;
- dans la première conduite de commande (51) commandant le troisième distributeur (43) ;
- par ledit troisième distributeur (43) qui autorise dans ce cas de figure uniquement le passage dudit fluide vers la seizième conduite (103) ;
- dans la conduite de commande supplémentaire (113) qui commande le deuxième clapet anti-retour (112) ; et
- dans la deuxième chambre (34) du vérin de retournement (7).

A ce fluide en provenance de la centrale hydraulique (37) correspond la première pression d'alimentation (P1) et le débit d'arrivée (Q1). Cette pression d'alimentation (P1)s'applique donc sur la petite surface de pilotage (65) et sur la grande surface de pilotage (68) agissant sur le premier distributeur (41) ce qui permet de maintenir ledit premier distributeur (41) dans son autre position (58).

Lorsque le fluide, en provenance de la centrale hydraulique (37), pénètre dans la deuxième chambre (34) le vérin de retournement (7) se raccourcit ce qui permet de pivoter la structure porteuse (5) d'un quart de tour autour de l'axe longitudinal (12a) tel que décrit précédemment. A cet effet, le fluide contenu dans la première chambre (33) du vérin de retournement (7) est chassé de cette dernière et passe :
- dans la dixième conduite (92), à l'issue de laquelle il est bloqué par le deuxième distributeur (42) qui occupe dans ce cas de figure sa position initiale (56) ;
- par le deuxième clapet anti-retour (112) qui est commandé ;
- dans la première conduite de commande (48) commandant le deuxième distributeur (42) ;
- dans la quinzième conduite (101) ;
- par le troisième distributeur (43) qui autorise le passage dudit fluide vers la quatorzième conduite (99) ;
- dans ladite quatorzième conduite (99) ;
- dans la troisième conduite de commande (53) commandant ledit troisième distributeur (43) ;
- par le deuxième étranglement (123) ; et
- dans les différentes conduites (90, 88, 86, 77, 76) pour finir dans la centrale hydraulique (3 7).

A ce fluide en provenance de la première chambre (33) du vérin de retournement (7) correspond une deuxième pression de retour (PR2) et un deuxième débit de retour (QR2), lesquels sont représentés en traits d'épaisseur moyenne sur la figure 3.

Au fluide, s'étendant dans les conduites représentées en traits fins, correspond la pression de retour normale (PRN) qui est sensiblement nulle.

Lorsque le vérin de retournement (7) se raccourcit, le deuxième étranglement (123) limite le débit du fluide en provenance de la première chambre (33) dudit vérin de retournement (7) et crée de ce fait le deuxième débit de retour (QR2) ce qui a pour effet de créer, en amont dudit deuxième étranglement (123), la deuxième pression de retour (PR2) qui est supérieure à la pression de retour normale (PRN).

Cette deuxième pression de retour (PR2) s'applique notamment sur la grande surface de pilotage (73) agissant sur le troisième distributeur (43) alors que la pression d'alimentation (P1)s'applique notamment sur la petite surface de pilotage (67) agissant sur ledit troisième distributeur (43). Lors du raccourcissement du vérin de retournement (7) la pression (P1) est certes supérieure à la deuxième pression de retour (PR2) mais la loi d'équilibre du troisième distributeur (43) n'est pas rompue pour des raisons qui ont été développées précédemment.

Cette deuxième pression de retour (PR2) s'applique également sur la petite surface de pilotage (66) agissant sur le deuxième distributeur (42) alors que les autres surfaces de pilotage (69, 72), agissant sur ledit deuxième distributeur (42), sont soumises à la pression de retour normale (PRN).

Cependant, le deuxième distributeur (42) reste dans sa position initiale (56) puisque la loi d'équilibre dudit deuxième distributeur (42) n'est pas rompue. En effet, l'effort, engendré par les pressions (PR2, PRN) qui règnent dans la première et la deuxième conduites de commande (48, 49) en complicité avec la petite et la grande surfaces de pilotage (66, 69) correspondantes, est inférieur à l'effort engendré par la pression de retour normale (PRN) qui règne dans la troisième conduite de commande (50) en complicité avec la grande surface de pilotage (72) correspondante et l'élément de rappel (62).

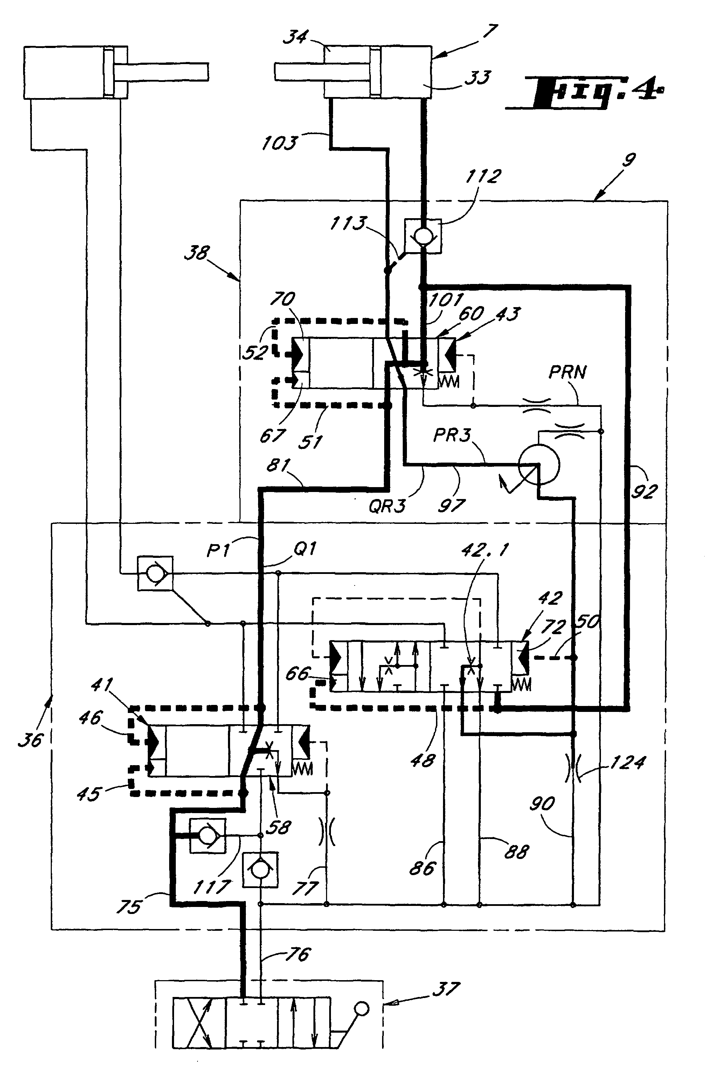

En fin de course du vérin de retournement (7) lorsque celui-ci est raccourcit au maximum, le deuxième débit de retour (QR2) devient nul et donc la pression régnant de chaque côté du deuxième étranglement (123) devient égale, c'est-à-dire nulle. Dès cet instant, la loi d'équilibre du troisième distributeur (43) est rompue, puisqu'il n'y a plus que la première conduite de commande (51) qui commande ledit troisième distributeur (43). A cet effet, le troisième distributeur (43) est amené dans son autre position (60) tel que représenté sur la figure 4.

Le fluide en provenance de la centrale hydraulique (37) emprunte maintenant les mêmes conduites (75, 117, 45, 81, 51) et le premier distributeur (41) tel que décrit précédemment et représenté sur la figure 3 jusqu'au troisième distributeur (43). A partir du troisième distributeur (43), le fluide en provenance de la centrale hydraulique (37) passe :
- dans la deuxième conduite de commande (52) commandant ledit troisième distributeur (43) ;
- dans la quinzième conduite (101) ;
- dans la dixième conduite (92) ;
- dans la première conduite de commande (48) commandant le deuxième distributeur (42) ; et
- par le deuxième clapet anti-retour (112) pour finir dans la première chambre (33) du vérin de retournement (7).

On remarquera que l'alimentation en fluide de la première et de la deuxième chambres (33, 34) du vérin de retournement (7) s'effectue notamment par l'intermédiaire du troisième distributeur (43) lequel est lui-même alimenté par l'intermédiaire du premier distributeur (41).

A ce fluide en provenance de la centrale hydraulique (37) correspond la pression d'alimentation (P1) et le débit d'arrivée (Q1). Cette pression d'alimentation (P1) s'applique donc sur la petite et la grande surfaces de pilotage (45, 46) agissant sur le premier distributeur (41) ce qui permet de maintenir ce dernier dans son autre position (58).

Cette pression d'alimentation (P1)s'applique également sur la petite et la grande surfaces de pilotage (67, 70) agissant sur le troisième distributeur (43) ce qui permet de maintenir ce dernier dans son autre position (60).

Lorsque le fluide en provenance de la centrale hydraulique (37) pénètre dans la première chambre (33), le vérin de retournement (7) se rallonge ce qui permet de pivoter la structure porteuse (5) d'un quart de tour supplémentaire autour de l'axe longitudinal (12a) tel que décrit précédemment. La structure porteuse (5) aura donc effectué un demi tour soit 180°.

A cet effet, lorsque le vérin de retournement (7) se rallonge, le fluide contenu dans la deuxième chambre (34) dudit vérin est chassé de cette dernière et passe :
- dans la seizième conduite (103) ;
- dans la conduite de commande supplémentaire (113) ;
- par le troisième distributeur (43) qui autorise le passage dudit fluide vers la treizième conduite (97) ;
- dans ladite treizième conduite (97) ;
- dans la troisième conduite de commande (50) commandant le deuxième distributeur (42) ;
- dans la neuvième conduite (90) à l'une des issues de laquelle il est bloqué par le deuxième distributeur (42) au moyen de l'étranglement (42.1) ;
- par le troisième étranglement (124) ; et
- dans les différentes conduites (88, 86, 77, 76) pour finir dans la centrale hydraulique (37).

A ce fluide, en provenance de la deuxième chambre (34) du vérin de retournement (7), correspond une troisième pression de retour (PR3) et un troisième débit de retour (QR3) lesquels sont représentés en traits d'épaisseur moyenne sur la figure 4.

Au fluide, s'étendant dans les conduites représentées en traits fins, correspond la pression de retour normale (PRN) qui est sensiblement nulle. Lorsque le vérin de retournement (7) se rallonge, le troisième étranglement (124) limite le débit du fluide en provenance de la deuxième chambre (34) et crée de ce fait le troisième débit de retour (QR3) ce qui a pour effet de créer en amont dudit troisième étranglement (124) la troisième pression de retour (PR3) qui est supérieure à la pression de retour normale (PRN).

Cette troisième pression de retour (PR3) s'applique notamment sur la grande surface de pilotage (72) agissant sur le deuxième distributeur (42), alors que la pression d'alimentation (Pl)s'applique notamment sur la petite surface de pilotage (66) agissant sur ledit deuxième distributeur (42). Lors de l'allongement du vérin de retournement (7), la pression d'alimentation (P1) est certes supérieure à la troisième pression de retour (PR3), mais la loi d'équilibre du deuxième distributeur (43) n'est pas rompue pour des raisons qui ont été développées précédemment. Ainsi, le vérin de retournement (7) commande en partie le deuxième distributeur (42).

En fin de course du vérin de retournement (7), lorsque celui-ci est allongé au maximum, le troisième débit de retour (QR3) devient nul et donc la pression régnant de chaque côté du troisième étranglement (124) devient égale, c'est-à-dire nulle.

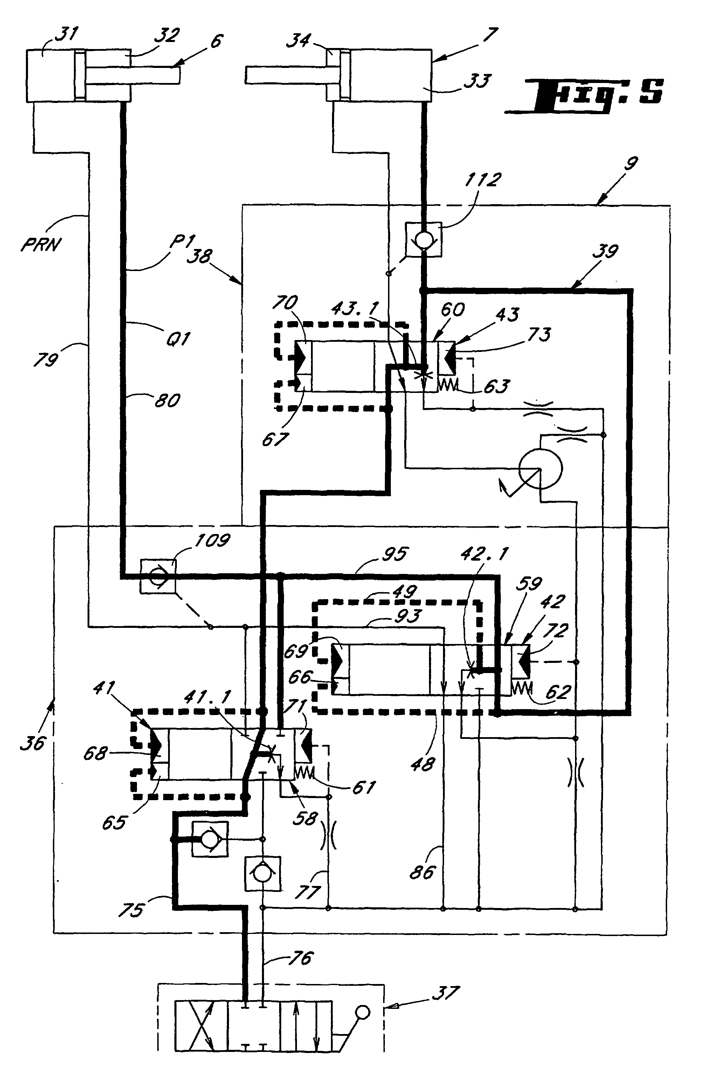

Dès cet instant, la loi d'équilibre du deuxième distributeur (42) est rompue puisqu'il n'y a plus que la première conduite de commande (48) qui commande ledit deuxième distributeur (42). A cet effet, le deuxième distributeur (42) est amené à son tour dans son autre position (59) tel que représenté sur la figure 5. Dans ce cas de figure, on notera que chaque distributeur (41, 42, 43) s'étend dans son autre position (58, 59, 60).

Le fluide en provenance de la centrale hydraulique (37) emprunte maintenant le même chemin que celui de la phase précédente représentée sur la figure 4 jusqu'au deuxième distributeur (42). A partir du deuxième distributeur (42) le fluide en provenance de la centrale hydraulique (37) passe :
- dans la douzième conduite (95) ;
- dans la cinquième conduite (80) à l'une des issues de laquelle il est bloqué par le premier distributeur (41) ;
- par le premier clapet anti-retour (109) ;
- dans la deuxième chambre (32) du vérin de repliage/dépliage (6) et ;
- dans la deuxième conduite de commande (49) commandant ledit deuxième distributeur (42).

On remarquera que l'alimentation en fluide de la deuxième chambre (32) du vérin de repliage/dépliage (6) s'effectue notamment par l'intermédiaire du deuxième distributeur (42) lequel est lui-même alimenté par l'intermédiaire du troisième distributeur (43).

A ce fluide en provenance de la centrale hydraulique (37) correspond la pression d'alimentation (P1) et le débit d'arrivée (Q1).

Cette pression d'alimentation (P1) s'applique donc sur toutes les petites surfaces de pilotage (65, 66, 67) et sur toutes les grandes surfaces de pilotage (68, 69, 70), permettant d'agir sur les distributeurs (41, 42, 43) correspondant dans le sens contraire à leurs éléments de rappel (61, 62, 63) respectifs alors que les grandes surfaces de pilotage (71, 72, 73) permettant d'agir sur lesdits distributeurs (41, 42, 43) dans le même sens que lesdits éléments de rappel (61, 62, 63), sont soumises à la pression de retour normale (PRN) qui est sensiblement nulle. Un tel agencement des pressions (P1, PRN) permet de maintenir chaque distributeur (41, 42, 43) dans son autre position (58, 59, 60) durant toute la durée du raccourcissement du vérin de repliage/dépliage (6).

Lorsque le fluide en provenance de la centrale hydraulique (37) pénètre dans la deuxième chambre (32), le vérin de repliage/dépliage (6) se raccourcit ce qui permet de déplier la charrue (1) tel que décrit précédemment.

A cet effet, lorsque le vérin de repliage/dépliage (6) se raccourcit, le fluide contenu dans la première chambre (31) dudit vérin est chassé de cette dernière et passe notamment :
- dans la quatrième conduite (79) ;
- dans la onzième conduite (93) ;
- par le deuxième distributeur (42) qui autorise le passage dudit fluide vers la septième conduite (86) ; et
- dans une partie de la troisième et la deuxième conduites (77, 76) pour finir dans la centrale hydraulique (37).

A ce fluide en provenance de la première chambre (31) du vérin de repliage/dépliage (6) correspond la pression de retour normale (PRN) qui est sensiblement nulle et représentée en traits fins sur la figure 5 ce qui facilite le retour dudit fluide vers la centrale hydraulique (37).

En fin de course du vérin de repliage/dépliage (6), lorsque celui-ci est raccourcit au maximum et que la charrue (1) est donc dans son autre position de travail, l'opérateur relâche son action sur la centrale hydraulique (37) de manière à couper l'alimentation en fluide du dispositif (9). A cet effet, l'ensemble du circuit (39) est soumis à la pression de retour normale (PRN), sauf les chambres (32, 33) des vérins (6, 7) et quelques conduites correspondantes. En effet, le fluide contenu dans ces dernières est retenu par le premier et le deuxième clapets anti-retour (109, 112).

Les trois distributeurs (41, 42, 43) peuvent maintenant revenir dans leurs positions initiales (55, 56, 57) à l'aide des éléments de rappel (61, 62, 63) et des étranglements (41.1, 41.2, 42.1, 42.2, 43.1, 43.2) tels que décrits précédemment.

La charrue (1) équipée du dispositif (9) est maintenant prête à être retournée dans sa position de travail initiale et pour ce faire l'opérateur procède de la même manière que celle décrite auparavant de sorte que la charrue se replie, tourne de deux fois 90° et se déplie.

L'opérateur a également la possibilité d'intervenir sur le réglage de l'aplomb de la charrue (1). Pour ce faire, il faut dans un premier temps pivoter quelque peu la structure porteuse (5) autour de l'axe longitudinal (12a) de l'articulation cylindrique (12) de manière à libérer la butée mécanique (127, 128) correspondante qui définie la position angulaire de ladite structure porteuse (5) par rapport à la structure d'attelage (2).

Pour ce faire, l'opérateur commande normalement le dispositif (9) en autorisant l'alimentation en fluide dudit dispositif (9) par l'intermédiaire de la première conduite (75) comme décrit précédemment jusqu'à ce que la structure porteuse ait libéré la butée mécanique (127, 128) correspondante, après quoi l'opérateur cesse de commander ledit dispositif (9). A cet effet, la charrue (1) s'est repliée et a amorcé quelque peu le retournement.

Ensuite, l'opérateur procède au réglage de la butée mécanique (127, 128) correspondante et pour finir, il commande le dispositif (9) en autorisant, au moyen de la centrale hydraulique (37), l'alimentation en fluide dudit dispositif (9) par l'intermédiaire de la deuxième conduite (76).

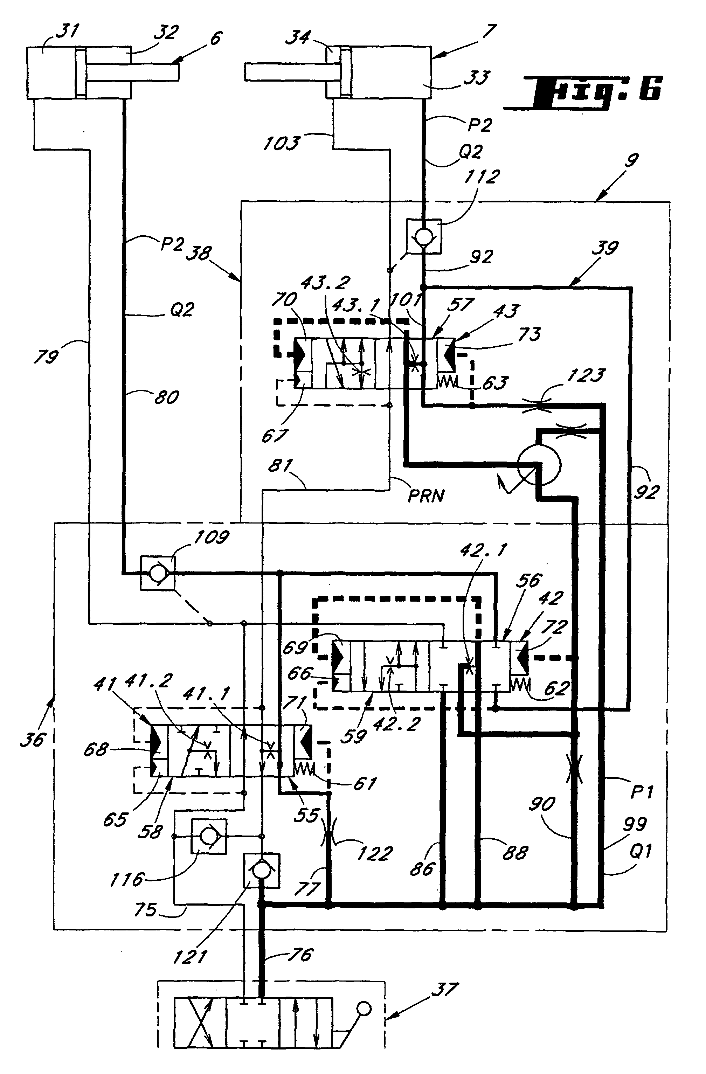

A ce fluide en provenance de la centrale hydraulique (37) correspond la pression d'alimentation (P1) et le débit d'arrivée (Q1) lesquels sont représentés en traits épais sur la figure 6 et aux traits fins correspond la pression de retour normale (PRN).

On notera que tels que représentés sur la figure 6, les trois distributeurs (41, 42, 43) sont revenus dans leurs positions initiales (55, 56, 57) à l'aide des éléments de rappel (61, 62, 63) et des étranglements (41.1, 41.2, 42.1, 42.2, 43.1, 43.2) correspondants.

Ce fluide en provenance de la centrale hydraulique (37) accède à la deuxième chambre (32) du vérin de repliage/dépliage (6) et à la première chambre (33) du vérin de retournement (7) en passant notamment :
- dans une partie de la deuxième conduite (76) jusqu'au quatrième clapet anti-retour (121), lequel interdit le passage dudit fluide en direction du premier distributeur (41) ;
- dans la troisième conduite (77) ;
- par le premier étranglement (122) ;
- par le premier distributeur (41) qui autorise le passage dudit fluide vers la cinquième conduite (80) ;
- dans ladite cinquième conduite (80) ;
- par le premier clapet anti-retour (109) jusqu'à accéder à ladite deuxième chambre (32) ; et
- à partir de ladite troisième conduite (77), ledit fluide bifurque en passant en sus :
   - dans les conduites (86, 88, 90, 99) ;
   - par le deuxième étranglement (123) ;
   - par le troisième distributeur (43) qui autorise le passage dudit fluide vers la quinzième conduite (101) ;
   - dans une partie de la dixième conduite (92) ; et
   - par le deuxième clapet anti-retour (112) jusqu'à accéder à ladite première chambre (33).

Lorsque ce fluide en provenance de la centrale hydraulique (37) pénètre dans la deuxième et la première chambres (32, 33), le vérin de repliage/dépliage (6) se raccourcit et le vérin de retournement (7) se rallonge, ce qui permet de déplier la charrue (1) sensiblement en même temps que de la pivoter pour la ramener dans sa position de travail.

A cet effet, le fluide contenu dans la première chambre (31) du vérin de repliage/dépliage (6) est chassé de cette dernière en passant notamment par :
- la quatrième conduite (79) ;
- le premier distributeur (41 ) ; et
- la première conduite (75) jusqu'à aboutir à la centrale hydraulique (37).

Le fluide contenu dans la deuxième chambre (34) du vérin de retournement (7) est, quant à lui, chassé de cette dernière en passant notamment :
- dans la seizième conduite (103) ;
- par le troisième distributeur (43) qui autorise le passage dudit fluide vers la sixième conduite (81) ;
- dans ladite sixième conduite (81) ;
- par le premier distributeur (41) qui autorise le passage dudit fluide vers la deuxième conduite (76) ;
- dans une partie de ladite deuxième conduite (76) ;
- par le troisième clapet anti-retour (116) ;
- par la première conduite (75) jusqu'à accéder à ladite centrale hydraulique (37).

On remarquera que le fluide, en provenance de la centrale hydraulique (37), passe par le premier et le deuxième étranglements (122, 123) qui permettent de limiter le débit d'arrivé (Q1) et de créer de ce fait, en aval desdits étranglements (122, 123), un deuxième débit d'arrivée (Q2) inférieur au débit d'arrivée (Q1), ce qui permet de faire rentrer le vérin de repliage/dépliage (6) et de faire sortir le vérin de retournement (7) moins rapidement que précédemment.

Au fluide, en provenance de la centrale hydraulique (37) située en aval des étranglements (122, 123), correspond également une deuxième pression d'alimentation (P2) lorsque le vérin de repliage/dépliage (6) se raccourcit et que le vérin de retournement (7) s'allonge.

Le deuxième débit d'arrivée (Q2) et la deuxième pression d'alimentation (P2) sont représentés en traits d'épaisseur moyenne sur la figure 6.

Le fluide, s'étendant dans la première chambre (31) et la deuxième chambre (34) des vérins (6, 7), peut, quant à lui, rejoindre librement la centrale hydraulique (37).

On remarquera encore que la grande surface de pilotage (71) agissant sur le premier distributeur (41) est soumise à la deuxième pression d'alimentation (P2) alors que les autres surfaces de pilotage (65, 68) agissant sur ledit premier distributeur (41) sont soumises à la pression de retour normale (PRN) ce qui permet de conforter la position initiale (55) dudit premier distributeur (41).

La grande surface de pilotage (72) et la grande surface de pilotage (69) agissant sur le deuxième distributeur (42) sont soumises à la pression d'alimentation (P1) alors que la petite surface de pilotage (66) agissant sur ledit deuxième distributeur (42) est soumise à la deuxième pression d'alimentation (P2).

Cependant, le deuxième distributeur (42) reste dans sa position initiale (56) puisque la loi d'équilibre dudit deuxième distributeur (42) n'est pas rompue. En effet, les efforts, engendrés par la pression d'alimentation (P1) en complicité avec les grandes surfaces (69, 72), s'annulent alors que l'effort de l'élément de rappel (62) est supérieur à l'effort engendré par la deuxième pression d'alimentation (P2) en complicité avec la petite surface de pilotage (66).

Les deux grandes surfaces de pilotage (70, 73) agissant sur le troisième distributeur (43) sont soumises, quant à elles, à la deuxième pression d'alimentation (P2) alors que la petite surface de pilotage (67) dudit troisième distributeur (43) est soumise à la pression de retour normale (PRN). La loi d'équilibre de ce troisième distributeur (43) n'est pas rompue puisque l'effort engendré par la pression d'alimentation (P2) en complicité avec la grande surface (73) correspondante et l'élément de rappel (63) est supérieur à l'effort engendré par les pressions (P2, PRN) en complicité avec les surfaces de pilotage (67, 70).

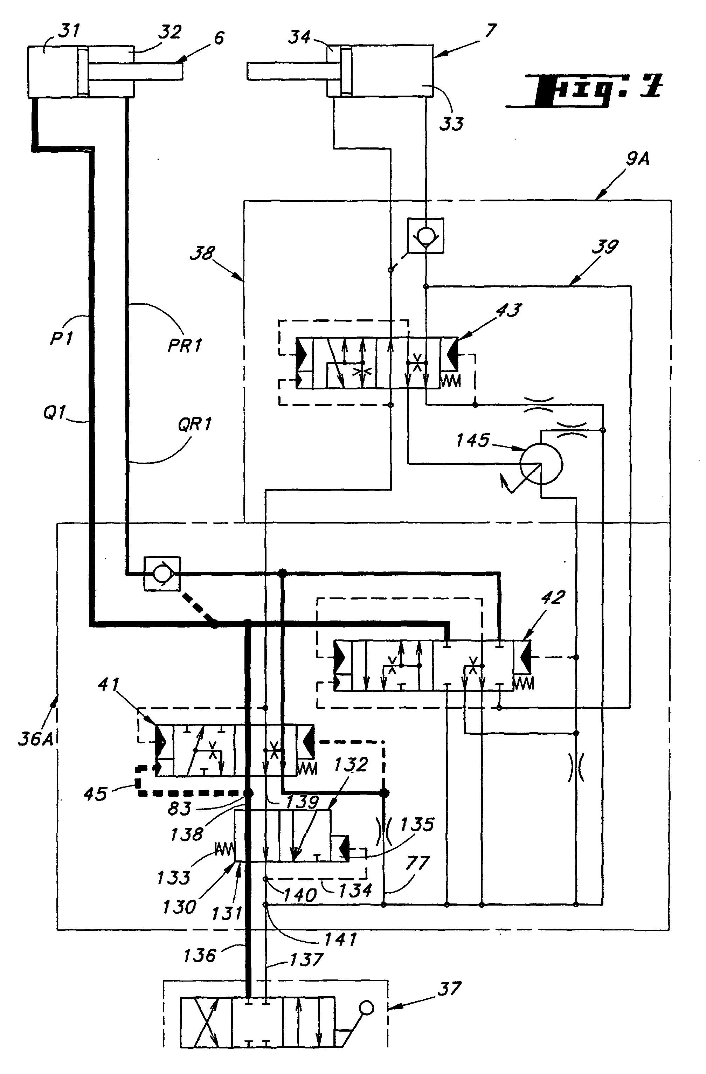

La figure 7 représente un deuxième exemple de réalisation du dispositif (9A) selon l'invention. Ce deuxième exemple de réalisation du dispositif (9A) comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments du dispositif (9) décrit précédemment. Ces éléments seront affectés du même numéro de repère que ces éléments comparables du dispositif (9) et seront suivis de la lettre A. Ils ne seront décrits que si cela s'avère nécessaire.

Ce deuxième exemple de réalisation du dispositif (9A) représenté sur la figure 7 se différencie du premier par le fait que le troisième et le quatrième clapets anti-retour (116, 121) ont été remplacés par un quatrième distributeur (130). Ce quatrième distributeur (130) peut occuper deux positions (131, 132) distinctes, une position initiale (131) et une autre position (132). Un élément de rappel (133) commande le quatrième distributeur (130) de manière à le maintenir ou à le rappeler dans sa position initiale (131).

Ce quatrième distributeur (130) est en sus commandé par une conduite de commande (134) qui communique avec une surface de pilotage (135) qui agit sur ledit quatrième distributeur (130) dans le sens contraire à son élément de rappel (133) de manière à amener ledit quatrième distributeur (130) dans son autre position (132).

Pour assurer la mise en place dans l'une ou l'autre position (131, 132) du quatrième distributeur (130), il faut que la loi d'équilibre de ce dernier soit rompue. Cette loi d'équilibre est connue par l'homme de l'art et ne sera par conséquent pas détaillée davantage.

On notera que ce quatrième distributeur (130) comporte quatre orifices et qu'à cet effet, il communique avec :
- la centrale hydraulique (37) du véhicule moteur (4) au moyen d'une dix-huitième conduite (136) et d'une dix-neuvième conduite (137) ;
- le premier distributeur (41 ) au moyen d'une vingtième conduite (138) et d'une vingt et unième conduite (139) tel que représenté sur la figure 7.

On notera que la première conduite de commande (45) communique dans ce cas de figure avec la vingtième conduite (138) à laquelle elle est raccordée au moyen du deuxième point de raccordement (83).

La conduite de commande (134) du quatrième distributeur (130) communique avec la dix-neuvième conduite (137) à laquelle elle est raccordée en un vingt et unième point de raccordement (140) et la dix-neuvième conduite (137) communique avec la troisième conduite (77) à laquelle elle est raccordée en un vingt-deuxième point de raccordement (141).

Lorsque le quatrième distributeur (130) occupe sa position initiale (131), il autorise le passage du fluide de la dix-huitième conduite (136) vers la vingtième conduite (138) et de la vingt et unième conduite (139) vers la dix-neuvième conduite (137). Lorsque le quatrième distributeur (130) occupe son autre position (132), il autorise le passage du fluide de la vingtième conduite (138) et de la vingt et unième conduite (139) vers la dix-huitième conduite (136), le fluide s'étendant dans la dix-neuvième conduite (137) étant bloqué à l'entrée dudit quatrième distributeur (130).

Le fonctionnement de ce dispositif (9A) est sensiblement identique à celui décrit précédemment.

On notera toutefois que lorsque l'opérateur souhaite amener la charrue (1A) dans l'autre position de travail, il actionne la centrale hydraulique (37) de manière à autoriser l'alimentation en fluide du dispositif (9A) par l'intermédiaire de la dix-huitième conduite (136). Ce fluide en provenance de la centrale hydraulique (37) passe dans la dix-huitième conduite (136), dans le quatrième distributeur (130), dans la vingtième conduite (138), dans la première conduite de commande (45) et dans le premier distributeur (41) à partir duquel ledit fluide emprunte le même chemin que celui décrit précédemment sur la base de la figure 2. Le retour de fluide contenu dans la deuxième chambre (32) du vérin de repliage/dépliage (6) emprunte le même chemin que celui décrit précédemment sur la base de la figure 2 jusqu'au vingt-deuxième point de raccordement (141) à partir duquel il emprunte la dix-neuvième conduite (137) jusqu'à la centrale hydraulique (37).

On remarquera encore que la pression qui règne dans la conduite de commande (134) du quatrième distributeur (130) est la pression de retour normale (PRN) et que par conséquent ledit quatrième distributeur (130) reste dans sa position initiale (131) sous l'effet de son élément de rappel (133).

Pour intervenir sur le réglage de l'aplomb de la charrue (1A) l'opérateur commande le dispositif (9A) de la même manière que décrite précédemment jusqu'à ce que ladite charrue (1A) ait amorcé son retournement.

Après le réglage de la butée mécanique (127, 128) correspondante, pour remettre la charrue (1A) dans sa position de travail, l'opérateur commande le dispositif (9A) en autorisant, au moyen de la centrale hydraulique (37), l'alimentation en fluide dudit dispositif (9A) par l'intermédiaire de la dix-neuvième conduite (137). Ce fluide en provenance de la centrale hydraulique (37) accède à la deuxième chambre (32) du vérin de repliage/dépliage (6) et à la première chambre (33) du vérin de retournement (7) en passant donc par la dix-neuvième conduite (137) jusqu'au vingt-deuxième point de raccordement (141) à partir duquel il emprunte le même chemin que celui décrit précédemment sur la base de la figure 6.

Le fluide contenu dans la première chambre (31) du vérin de repliage/dépliage (6) et dans la deuxième chambre (34) du vérin de retournement (7) est chassé de ces dernières jusqu'à la centrale hydraulique (37) en empruntant le même chemin que celui décrit précédemment sur la base de la figure 6 et en passant notamment dans la vingtième conduite (138), par le quatrième distributeur (130), et dans la dix-huitième conduite (136) avant de rejoindre ladite centrale hydraulique (37).

On notera que la pression de ce fluide en provenance de la centrale hydraulique (37) s'applique en sus, lors de cette remise en position de travail sur la surface de pilotage (135) agissant sur le quatrième distributeur (130) ce qui permet d'amener ledit quatrième distributeur (130) dans son autre position (132) de manière à ce qu'il autorise le retour du fluide des chambres (31, 34). Lorsque la charrue (1A) est remise en position de travail, le quatrième distributeur (130) revient dans sa position initiale (131) sous l'effet de son élément de rappel (133).

On notera que le premier bloc (36, 36A), tel que représenté sur les figures 2 à 7, forme un bloc de repliage/dépliage permettant l'alimentation des chambres (31, 32) du vérin de repliage/dépliage (6) et du deuxième bloc (38) alors que ledit deuxième bloc (38) forme un bloc de retournement permettant l'alimentation des chambres (33, 34) du vérin de retournement (7).

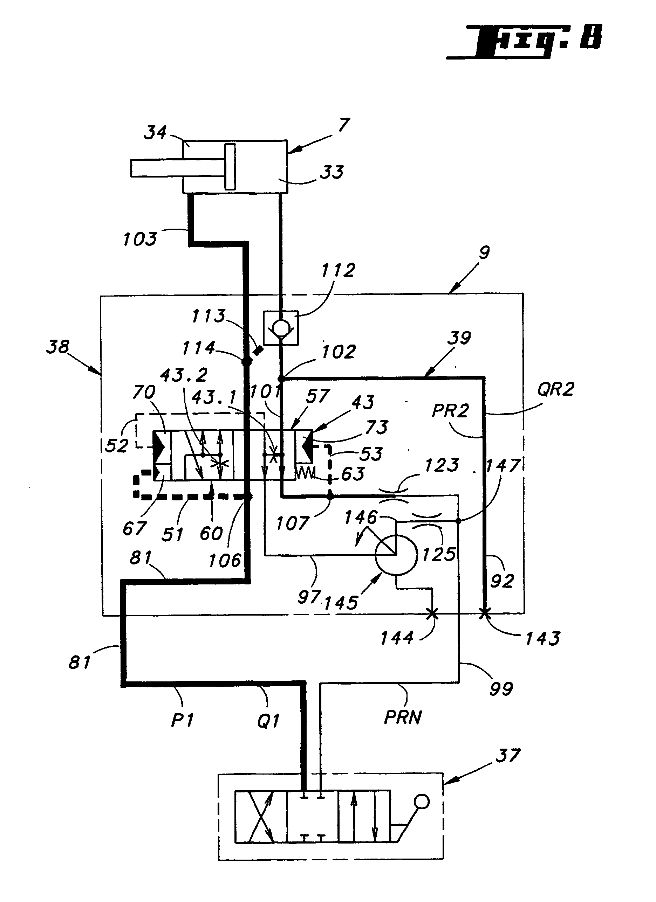

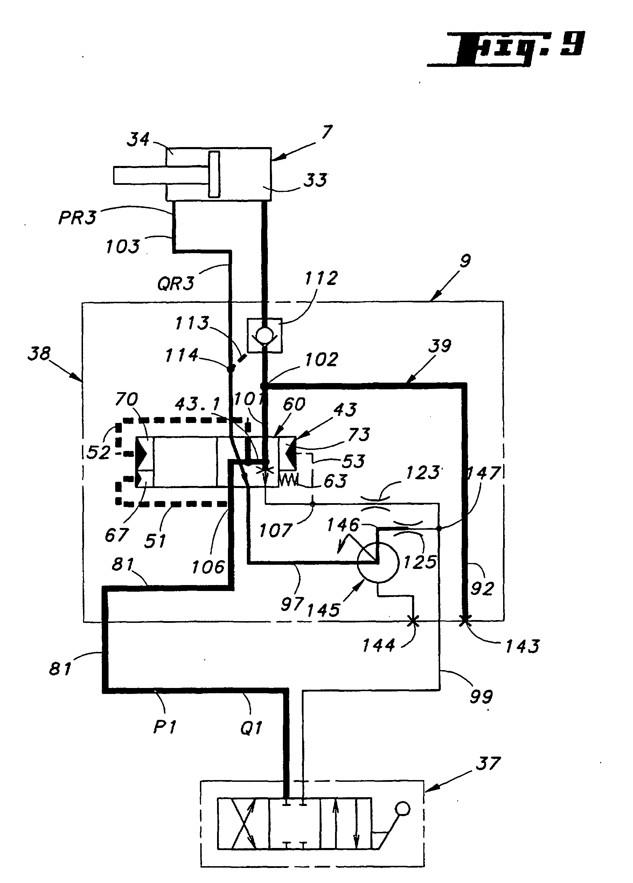

A la lumière des figures 8 et 9, on voit le bloc de retournement (38) seul. En effet, ce bloc de retournement (38) est amovible du bloc de repliage/dépliage (36 ; 36A) et peut fonctionner de manière autonome de manière à commander le vérin de retournement (7) seul lorsque la charrue est une charrue (1B) réversible simple sans largeur de travail variable par exemple.

A cet effet, on remarquera à la lumière des figures 2 à 9 que la sixième conduite (81), la dixième conduite (92), la treizième conduite (97) et la quatorzième conduite (99) sont débouchantes du bloc de retournement (38) et du bloc de repliage/dépliage (36 ; 36A).

A la lumière des figures 8 et 9, on voit que lorsque le bloc de retournement (38) est utilisé seul, les extrémités de la dixième et de la treizième conduites (92, 97) sont obturées au moyen d'un bouchon (143, 144) correspondant. La sixième et la quatorzième conduites (81, 99) communiquent quant à elles, dans ce cas de figure, directement avec la centrale hydraulique (37).

On remarquera qu'il est en sus prévu un dispositif de sélection (145) permettant de couper en deux la treizième conduite (97) et de la raccorder à une vingt-deuxième conduite (146) raccordée à la quatorzième conduite (99) en un vingt-troisième point de raccordement (147). Un quatrième étranglement (125) est situé sur la vingt-deuxième conduite (146) et a pour fonction de limiter le débit du fluide en provenance de la deuxième chambre (34) du vérin de retournement (7).

Le dispositif de sélection (145) permet en sus de sélectionner le troisième étranglement (124) lorsque le bloc de retournement (38) est combiné avec le bloc de repliage/dépliage (36) ou de sélectionner le quatrième étranglement (125) lorsque ledit bloc de retournement (38) fonctionne de manière autonome.

Lorsque l'opérateur souhaite retourner la charrue (1B) d'un demi-tour, il commande la centrale hydraulique (37) de manière à autoriser l'alimentation en fluide du bloc de retournement (38) par l'intermédiaire de la sixième conduite (81) et d'autoriser le retour du fluide contenu dans la première chambre (33) du vérin de retournement (7).

A cet effet, le vérin de retournement (7) se raccourcit ce qui fait pivoter la structure porteuse (5) d'un quart de tour. A cet effet, on voit à la lumière de la figure 8 que le fluide en provenance de la centrale hydraulique (37) et le retour du fluide qui est chassé de la première chambre (33) du vérin de retournement (7) emprunte, à partir de la sixième conduite (81) et à partir de ladite première chambre (33), sensiblement le même chemin que celui décrit précédemment sur la base de la figure 3. On notera toutefois qu'à l'issue de la dixième conduite (92) ledit fluide est bloqué au moyen du bouchon (143).

En fin de course du vérin de retournement (7), lorsque celui-ci est raccourcit au maximum, le troisième distributeur (43) est amené dans son autre position (60) tel que représenté sur la figure 9 pour les mêmes raisons que celles décrites précédemment sur la base de la figure 3. A cet effet, le fluide en provenance de la centrale hydraulique (37) et le retour du fluide qui est chassé de la deuxième chambre (34) du vérin de retournement (7) emprunte à partir de la sixième conduite (81) et à partir de ladite deuxième chambre (34) sensiblement le même chemin que celui décrit précédemment sur la base de la figure 4. On notera toutefois qu'à l'issue de la dixième conduite (92) ledit fluide est bloqué au moyen du bouchon (143) et que ledit fluide en provenance de la deuxième chambre (34) passe dans la vingt-deuxième conduite (146) et par le quatrième étranglement (125).

Diverses modifications peuvent être apportées aux exemples qui viennent d'être décrits, notamment en ce qui concerne la constitution des divers éléments ou par substitution d'équivalents techniques ou encore l'agencement des différentes conduites sans pour autant sortir du domaine de protection défini par les revendications.

C'est ainsi qu'il est par exemple possible d'inverser les conduites (79, 80) en communication avec la première et la deuxième chambres (31, 32) du vérin de repliage/dépliage (6) et/ou les conduites (92, 103) en communication avec la première et la deuxième chambres (33, 34) du vérin de retournement (7) de manière à obtenir des mouvements desdits vérins (6, 7) inversés.

Il est encore parfaitement possible de prendre l'alimentation du deuxième distributeur (42) (figures 4 et 5) à un endroit différent que celui représenté sur les différentes figures tout en conservant la dixième conduite (92) communiquant avec la quinzième conduite (101) au moyen du douzième point de raccordement (102). Cette dixième conduite (92) fera alors, avec la première conduite de commande (48) du deuxième distributeur (42), uniquement office de conduite de commande.

L'alimentation du deuxième distributeur (42) pourra par exemple être prise directement à la sortie du premier distributeur (41) sur la cinquième ou la sixième conduites (80, 81).

## Revendications

1. Dispositif permettant de commander deux vérins (6, 7) contenant chacun une première et une deuxième chambres (31, 32 ; 33, 34) comportant :
- deux blocs (36 ; 36A ; 38) en communication avec les vérins (6, 7) ;
- un circuit (39) comprenant trois distributeurs (41, 42, 43 ; 130) et des conduites de commande (45, 46, 47, 48, 49, 50, 51, 52, 53 ; 134) permettant de commander lesdits distributeurs (41, 42, 43 ; 130) ;
- un premier bloc (36 ; 36A) en communication avec le premier vérin (6) et un deuxième bloc (38) en communication avec le deuxième vérin (7) et le premier bloc (36 ; 36A), un premier et un deuxième distributeurs (41, 42) s'étendant dans le premier bloc (36 ; 36A) et un troisième distributeur (43) s'étendant dans le deuxième bloc (38),
les distributeurs (41, 42, 43 ; 130) sont commandés chronologiquement en fonction des pressions (P1, PR1, PRN, PR2, PR3, P2) qui règnent dans le circuit (39) au moyen des conduites de commande (45, 46, 47, 48, 49, 50, 51, 52, 53 ; 134) qui prélèvent la pression en différents points dudit circuit (39) de manière à autoriser successivement l'alimentation de :
- la première chambre (31) du premier vérin (6) permettant l'allongement dudit premier vérin (6) au moyen d'une quatrième conduite (79) communiquant avec ledit premier distributeur (41), lequel est alimenté via une centrale hydraulique (37) d'un véhicule moteur (4) au moyen d'une première conduite (75), ledit premier distributeur (41) communiquant avec la deuxième chambre (32) dudit premier vérin (6) au moyen d'une cinquième conduite (80) ;
- la deuxième chambre (34) du deuxième vérin (7) permettant le raccourcissement dudit deuxième vérin (7) au moyen d'une seixième conduite (103) communiquant avec ledit troisième distributeur (43), lequel est alimenté par ledit premier distributeur (41) au moyen d'une sixième conduite (81) ;
- la première chambre (33) dudit deuxième vérin (7) permettant le rallongement dudit deuxième vérin (7) au moyen d'une dixième conduite (92) communiquant avec ledit troisième distributeur (43), ledit troisième distributeur (43) étant alimenté par ledit premier distributeur (41) via ladite sixième conduite (81) ; et
- la deuxième chambre (32) dudit premier vérin (6) permettant le raccourcissement dudit premier vérin (6) au moyen de ladite cinquième conduite (80) communiquant avec ledit deuxième distributeur (42) ;
***caractérisé en ce* que** lorsque ladite première chambre (33) est alimentée, le deuxième distributeur (42) est alimenté par l'intermédiaire dudit troisième distributeur (43) via une dixième conduite (92).

2. Dispositif selon la revendication 1, ***caractérisé en ce* que** la première chambre (31) du premier vérin (6) peut uniquement être alimentée par l'intermédiaire du premier distributeur (41).

3. Dispositif selon la revendication 1 ou 2, ***caractérisé en ce* que** l'alimentation de la première chambre (33) et de la deuxième chambre (34) du deuxième vérin (7) s'effectue notamment par l'intermédiaire du troisième distributeur (43).

4. Dispositif selon l'une quelconque des revendications 1 à 3, ***caractérisé en ce* que** l'alimentation de la deuxième chambre (32) du premier vérin (6) s'effectue notamment par l'intermédiaire du deuxième distributeur (42).

5. Dispositif selon l'une quelconque des revendications 1 à 4, ***caractérisé en ce* que** le troisième distributeur (43) est alimenté par l'intermédiaire du premier distributeur (41).

6. Dispositif selon l'une quelconque des revendications 1 à 5, ***caractérisée en ce* que** chaque distributeur (41, 42, 43) est destiné à occuper deux positions distinctes :
- une position initiale (55, 56, 57) ; et
- une autre position (58, 59, 60) ;
et qu'il est en sus commandé par un élément de rappel (61, 62, 63) destiné à maintenir ou à rappeler ledit distributeur (41, 42, 43) dans sa position initiale (55, 56, 57).

7. Dispositif selon la revendication 6, ***caractérisé en ce* que** chaque distributeur (41, 42, 43) est commandé par trois conduites de commande (45, 46, 47, 48, 49, 50, 51, 52, 53), la première conduite de commande (45, 48, 51) permet d'agir sur le distributeur (41, 42, 43) dans le sens contraire à l'élément de rappel (61, 62, 63) au moyen d'une petite surface de pilotage (65, 66, 67), la deuxième conduite de commande (46, 49, 52) permet d'agir sur le distributeur (41, 42, 43) dans le sens contraire à l'élément de rappel (61, 62, 63) au moyen d'une grande surface de pilotage (68, 69, 70), la troisième conduite de commande (47, 50, 53) permet d'agir sur le distributeur (41, 42, 43) dans le même sens que l'élément de rappel (61, 62, 63) au moyen d'une grande surface de pilotage (71, 72, 73).

8. Dispositif selon la revendication 7, ***caractérisé en ce* que** lors de l'alimentation de la première chambre (31) du premier vérin (6), la pression d'alimentation (P1) régnant dans cette dernière s'exerce sur la petite surface de pilotage (65) du premier distributeur (41) alors que la pression de retour (PR1) régnant dans la deuxième chambre (32) dudit premier vérin (6) s'exerce sur la grande surface de pilotage (71) permettant d'agir sur ledit premier distributeur (41) dans le même sens que l'élément de rappel (61) correspondant.

9. Dispositif selon la revendication 8, ***caractérisé en ce* que** la pression de retour (PR1) régnant dans la deuxième chambre (32) du premier vérin (6) est supérieure à la pression de retour normale (PRN) lorsque ledit premier vérin (6) s'allonge ou se raccourcit et est obtenue au moyen d'un premier étranglement (122) limitant le débit du fluide (QR1) en provenance de ladite deuxième chambre (32).

10. Dispositif selon l'une quelconque des revendications 7 à 9, ***caractérisé en ce* que** lors de l'alimentation de la deuxième chambre (34) du deuxième vérin (7), la pression d'alimentation (P1) régnant dans cette dernière s'exerce notamment sur la petite surface de pilotage (67) du troisième distributeur (43) alors que la pression de retour (PR2) régnant dans la première chambre (33) dudit deuxième vérin (7) s'exerce notamment sur la grande surface de pilotage (73) permettant d'agir sur ledit troisième distributeur (43) dans le même sens que l'élément de rappel (63) correspondant.

11. Dispositif selon la revendication 10, ***caractérisé en ce* que** la pression d'alimentation (P1) régnant dans la deuxième chambre (34) du deuxième vérin (7) s'exerce également sur la petite surface de pilotage (65) du premier distributeur (41) et sur la grande surface de pilotage (68) permettant d'agir sur ledit premier distributeur (41) dans le sens contraire à son élément de rappel (61), alors que la pression de retour (PR2) régnant dans la première chambre (33) dudit deuxième vérin (7) s'exerce également sur la petite surface de pilotage (66) du deuxième distributeur (42).

12. Dispositif selon la revendication 10 ou 11, ***caractérisé en ce* que** la pression de retour (PR2) régnant dans la première chambre (33) du deuxième vérin (7) est supérieure à la pression de retour normale (PRN) lorsque ledit deuxième vérin (7) s'allonge ou se raccourcit et est obtenue au moyen d'un deuxième étranglement (123) limitant le débit du fluide (QR2) en provenance de ladite première chambre (33).

13. Dispositif selon la revendication 4 et l'une quelconque des revendications 7 à 12, ***caractérisé en ce* que** le deuxième distributeur (42), permettant l'alimentation de l'une des chambres (31, 32) du premier vérin (6), est commandé par le deuxième vérin (7).

14. Dispositif selon la revendication 13, ***caractérisé en ce* que** lors de l'alimentation de la première chambre (33) du deuxième vérin (7), la pression d'alimentation (P1) régnant dans cette dernière s'exerce notamment sur la petite surface de pilotage (66) du deuxième distributeur (42) alors que la pression de retour (PR3) régnant dans la deuxième chambre (34) dudit deuxième vérin (7) s'exerce sur la grande surface de pilotage (72) permettant d'agir sur ledit deuxième distributeur (42) dans le même sens que l'élément de rappel (62) correspondant.

15. Dispositif selon la revendication 14, ***caractérisé en ce* que** la pression d'alimentation (P1) régnant dans la première chambre (33) du deuxième vérin (7) s'exerce également sur :
- la petite surface de pilotage (65) du premier distributeur (41) ;
- la petite surface de pilotage (67) du troisième distributeur (43) ;
- la grande surface de pilotage (68) permettant d'agir sur le premier distributeur (41) dans le sens contraire à son élément de rappel (61) ; et
- la grande surface de pilotage (70) permettant d'agir sur le troisième distributeur (43) dans le sens contraire à son élément de rappel (63).

16. Dispositif selon les revendications 14 et 15, ***caractérisé en ce* que** la pression de retour (PR3) régnant dans la deuxième chambre (34) du deuxième vérin (7) est supérieure à la pression de retour normale (PRN) lorsque ledit deuxième vérin (7) s'allonge ou se raccourcit et est obtenue au moyen d'un troisième étranglement (124) limitant le débit du fluide (QR3) en provenance de ladite deuxième chambre (34).

17. Dispositif selon l'une quelconque des revendications 7 à 16, ***caractérisé en ce* que** lors de l'alimentation de la deuxième chambre (32) du premier vérin (6), la pression d'alimentation (P1) régnant dans cette dernière s'exerce notamment sur la grande surface de pilotage (69) permettant d'agir sur le deuxième distributeur (42) dans le sens contraire à son élément de rappel (62).

18. Dispositif selon la revendication 17, ***caractérisé en ce* que** la pression d'alimentation (P1) régnant dans la deuxième chambre (32) du premier vérin (6) s'exerce également sur :
- la petite surface de pilotage (65) du premier distributeur (41) ;
- la petite surface de pilotage (66) du deuxième distributeur (42) ;
- la petite surface de pilotage (67) du troisième distributeur (43) ;
- la grande surface de pilotage (68) permettant d'agir sur le premier distributeur (41) dans le sens contraire à son élément de rappel (61) ;
- la grande surface de pilotage (70) permettant d'agir sur le troisième distributeur (43) dans le sens contraire à son élément de rappel (63).

19. Dispositif selon l'une quelconque des revendications 1 à 18, ***caractérisé en ce* que** le deuxième bloc (38) en communication avec le deuxième vérin (7) est amovible du premier bloc (36 ; 36A) et peut fonctionner de manière autonome.

20. Dispositif selon la revendication 19, ***caractérisé en ce* qu'**il est prévu un quatrième étranglement (125) destiné à limiter le débit du fluide (QR3) en provenance de la deuxième chambre (34) du deuxième vérin (7).

21. Dispositif selon les revendications 16 et 20, ***caractérisé en ce* qu'**il est prévu un dispositif de sélection (145) permettant de sélectionner le troisième étranglement (124) ou le quatrième étranglement (125).

22. Dispositif selon l'une quelconque des revendications 1 à 21, ***caractérisé en* ce qu'**il est prévu un moyen permettant d'alimenter directement une des chambres (31 ; 32) du premier vérin (6) et/ou une des chambres (33 ; 34) du deuxième vérin (7).

23. Machine agricole comportant deux vérins (6, 7) et un dispositif (9 ; 9A) permettant de commander lesdits vérins (6, 7), ***caractérisée en ce* que** le dispositif (9 ; 9A) est un dispositif selon l'une quelconque des revendications 1 à 22.

24. Charrue comportant :
- une structure d'attelage (2) destinée à être liée à un véhicule moteur (4) ;
- une structure porteuse (5) pouvant d'une part être pivotée autour d'une articulation (12) d'axe longitudinal (12A) sensiblement horizontal et dirigé suivant la direction d'avance (13) et d'autre part être déplacée latéralement par rapport à ladite structure d'attelage (2) ;
- des corps de labour (10) liés à la structure porteuse (5) ;
- un premier vérin (6) permettant de déplacer latéralement la structure porteuse (5) par rapport à ladite structure d'attelage (2) ;
- un deuxième vérin (7) permettant de pivoter la structure porteuse (5) autour de l'articulation (12) ; et
- un dispositif (9 ; 9A) permettant de commander le premier et le deuxième vérins (6, 7),
***caractérisée en ce* que** le dispositif (9 ; 9A) est un dispositif selon l'une quelconque des revendications 1 à 22.

## Patentansprüche

1. Vorrichtung, die die Betätigung zweier Zylinder (6, 7) gestattet, die jeweils eine erste und eine zweite Kammer (31, 32; 33, 34) enthalten, mit:
- zwei mit den Zylindern (6, 7) in Verbindung stehenden Blöcken (36; 36A; 38);
- einem drei Verteiler (41, 42, 43; 130) und Steuerleitungen (45, 46, 47, 48, 49, 50, 51, 52, 53; 134), die eine Steuerung der Verteiler (41, 42, 43; 130) gestatten, enthaltenden Kreis (39);
- einem mit dem ersten Zylinder (6) in Verbindung stehenden ersten Block (36; 36A) und einem mit dem zweiten Zylinder (7) und dem ersten Block (36; 36A) in Verbindung stehenden zweiten Block (38), wobei sich ein erster und ein zweiter Verteiler (41, 42) im ersten Block (36; 36A) erstrecken und sich ein dritter Verteiler (43) im zweiten Block (38) erstreckt,
wobei die Verteiler (41, 42, 43; 130) in Abhängigkeit der im Kreis (39) herrschenden Drücke (P1, PR1, PRN, PR2, PR3, P2) mittels der Steuerleitungen (45, 46, 47, 48, 49, 50, 51, 52, 53; 134), die den Druck an verschiedenen Stellen des Kreises (39) abgreifen, chronologisch angesteuert werden, um nacheinander die Versorgung:
- der ersten Kammer (31) des ersten Zylinders (6), wodurch das Ausfahren des ersten Zylinders (6) mittels einer mit dem ersten Verteiler (41) in Verbindung stehenden vierten Leitung (79) gestattet wird, wobei der Verteiler (41) mittels einer ersten Leitung (75) über eine Hydraulikeinheit (37) eines Motorfahrzeugs (4) versorgt wird und mittels einer fünften Leitung (80) mit der zweiten Kammer (32) des ersten Zylinders (6) in Verbindung steht;
- der zweiten Kammer (34) des zweiten Zylinders (7), wodurch mittels einer mit dem dritten Verteiler (43) in Verbindung stehenden sechzehnten Leitung (103) das Einfahren des zweiten Zylinders (7) gestattet wird, wobei der Verteiler (43) mittels einer sechsten Leitung (81) durch den ersten Verteiler (41) versorgt wird;
- der ersten Kammer (33) des zweiten Zylinders (7), wodurch mittels einer mit dem dritten Verteiler (43) in Verbindung stehenden zehnten Leitung (92) das Ausfahren des zweiten Zylinders (7) gestattet wird , wobei der dritte Verteiler (43) über die sechste Leitung (81) durch den ersten Verteiler (41) versorgt wird; und
- der zweiten Kammer (32) des ersten Zylinders (6), wodurch mittels der mit dem zweiten Verteiler (42) in Verbindung stehenden fünften Leitung (80) das Einfahren des ersten Zylinders (6) gestattet wird,
zu gestatten; ***dadurch gekennzeichnet,* dass** bei Versorgung der ersten Kammer (33) der zweite Verteiler (42) über eine zehnte Leitung (92) durch den dritten Verteiler (43) versorgt wird.

2. Vorrichtung nach Anspruch 1, ***dadurch gekennzeichnet,* dass** die erste Kammer (31) des ersten Zylinders (6) einzig durch den ersten Verteiler (41) versorgt werden kann.

3. Vorrichtung nach Anspruch 1 oder 2, ***dadurch gekennzeichnet,* dass** die Versorgung der ersten Kammer (33) und der zweiten Kammer (34) des zweiten Zylinders (7) insbesondere durch den dritten Verteiler (43) erfolgt.

4. Vorrichtung nach irgend einem der Ansprüche 1 bis 3, ***dadurch gekennzeichnet,* dass** die Versorgung der zweiten Kammer (32) des ersten Zylinders (6) insbesondere durch den zweiten Verteiler (42) erfolgt.

5. Vorrichtung nach irgend einem der Ansprüche 1 bis 4, ***dadurch gekennzeichnet,* dass** der dritte Verteiler (43) durch den ersten Verteiler (41) versorgt wird.

6. Vorrichtung nach irgend einem der Ansprüche 1 bis 5, ***dadurch gekennzeichnet,* dass** jeder Verteiler (41, 42, 43) zwei verschiedene Stellungen einnehmen soll:
- eine Anfangsstellung (55, 56, 57); und
- eine andere Stellung (58, 59, 60);
und dass er darüber hinaus durch ein Rückholelement (61, 62, 63) betätigt wird, das den Verteiler (41, 42, 43) in seiner Anfangsstellung (55, 56, 57) halten oder dorthin zurückholen soll.

7. Vorrichtung nach Anspruch 6, ***dadurch gekennzeichnet,* dass** jeder Verteiler (41, 42, 43) durch drei Steuerleitungen (45, 46, 47, 48, 49, 50, 51, 52, 53) gesteuert wird, die erste Steuerleitung (45, 48, 51) es gestattet mittels einer kleinen Steuerfläche (65, 66, 67) in entgegengesetzter Richtung zum Rückholelement (61, 62, 63) auf den Verteiler (41, 42, 43) einzuwirken, die zweite Steuerleitung (46, 49, 52) es gestattet, mittels einer großen Steuerfläche (68, 69, 70) in entgegengesetzter Richtung zum Rückholelement (61, 62, 63) auf den Verteiler (41, 42, 43) einzuwirken, und die dritte Steuerleitung (47, 50, 53) es gestattet, mittels einer großen Steuerfläche (71, 72, 73) in die gleiche Richtung wie das Rückholelement (61, 62, 63) auf den Verteiler (41, 42, 43) einzuwirken.

8. Vorrichtung nach Anspruch 7, ***dadurch gekennzeichnet,* dass** bei der Versorgung der ersten Kammer (31) des ersten Zylinders (6) der in dieser Kammer herrschende Versorgungsdruck (P1) auf die kleine Steuerfläche (65) des ersten Verteilers (41) ausgeübt wird, während der in der zweiten Kammer (32) des ersten Zylinders (6) herrschende Rückdruck (PR1) auf die große Steuerfläche (71) ausgeübt wird, wodurch in die gleiche Richtung wie das entsprechende Rückholelement (61) auf den ersten Verteiler (41) eingewirkt werden kann.

9. Vorrichtung nach Anspruch 8, ***dadurch gekennzeichnet,* dass** der in der zweiten Kammer (32) des ersten Zylinders (6) herrschende Rückdruck (PR 1) über dem normalen Rückdruck (PRN) liegt, wenn der erste Zylinder (6) ausfährt oder einfährt, und mittels einer ersten Drossel (122), die den Durchfluss (QR1) des von der zweiten Kammer (32) stammenden Fluids begrenzt, erhalten wird.

10. Vorrichtung nach irgend einem der Ansprüche 7 bis 9, ***dadurch gekennzeichnet,* dass** bei der Versorgung der zweiten Kammer (34) des zweiten Zylinders (7) der in dieser Letzteren herrschende Versorgungsdruck (P1) insbesondere auf die kleine Steuerfläche (67) des dritten Verteilers (43) ausgeübt wird, während der in der ersten Kammer (33) des zweiten Zylinders (7) herrschende Rückdruck (PR2) insbesondere auf die große Steuerfläche (73) ausgeübt wird, wodurch in die gleiche Richtung wie das entsprechende Rückholelement (63) auf den dritten Verteiler (43) eingewirkt werden kann.

11. Vorrichtung nach Anspruch 10, ***dadurch gekennzeichnet,* dass** der in der zweiten Kammer (34) des zweiten Zylinders (7) herrschende Versorgungsdruck (P1) des Weiteren auf die kleine Steuerfläche (65) des ersten Verteilers (41) und auf die große Steuerfläche (68) ausgeübt wird, wodurch in entgegengesetzter Richtung zum Rückholelement (61) des ersten Verteilers (41) auf Letzteren eingewirkt werden kann, während der in der ersten Kammer (33) des zweiten Zylinders (7) herrschende Rückdruck (PR2) ebenfalls auf die kleine Steuerfläche (66) des zweiten Verteilers (42) ausgeübt wird.

12. Vorrichtung nach Anspruch 10 oder 11, ***dadurch gekennzeichnet*, dass** der in der ersten Kammer (33) des zweiten Zylinders (7) herrschende Rückdruck (PR2) höher ist als der normale Rückdruck (PRN), wenn der zweite Zylinder (7) ausfährt oder einfährt, und mittels einer zweiten Drossel (123), die den Durchfluss (QR2) des von der ersten Kammer (33) stammenden Fluids begrenzt, erhalten wird.

13. Vorrichtung nach Anspruch 4 und irgend einem der Ansprüche 7 bis 12, ***dadurch gekennzeichnet,* dass** der zweite Verteiler (42), der die Versorgung einer der Kammern (31, 32) des ersten Zylinders (6) gestattet, durch den zweiten Zylinder (7) gesteuert wird.

14. Vorrichtung nach Anspruch 13, ***dadurch gekennzeichnet,* dass** bei der Versorgung der ersten Kammer (33) des zweiten Zylinders (7) der in dieser Letzteren herrschende Versorgungsdruck (P1) insbesondere auf die kleine Steuerfläche (66) des zweiten Verteilers (42) ausgeübt wird, während der in der zweiten Kammer (34) des zweiten Zylinders (7) herrschende Rückdruck (PR3) auf die große Steuerfläche (72) ausgeübt wird, wodurch in die gleiche Richtung wie das entsprechende Rückholelement (62) auf den zweiten Verteiler (42) eingewirkt werden kann.

15. Vorrichtung nach Anspruch 14, ***dadurch gekennzeichnet,* dass** der in der ersten Kammer (33) des zweiten Zylinders (7) herrschende Versorgungsdruck (P1) des Weiteren auf:
- die kleine Steuerfläche (65) des ersten Verteilers (41);
- die kleine Steuerfläche (67) des dritten Verteilers (43);
- die große Steuerfläche (68), wodurch in entgegengesetzter Richtung zum Rückholelement (61) des ersten Verteilers (41) auf Letzteren eingewirkt werden kann; und
- die große Steuerfläche (70), wodurch in entgegengesetzer Richtung zum Rückholelement (63) des dritten Verteilers (43) auf Letzteren eingewirkt werden kann,
ausgeübt wird.

16. Vorrichtung nach den Ansprüchen 14 und 15, ***dadurch gekennzeichnet,* dass** der in der zweiten Kammer (34) des zweiten Zylinders (7) herrschende Rückdruck (PR3) höher ist als der normale Rückdruck (PRN), wenn der zweite Zylinder (7) ausfährt oder einfährt, und mittels einer dritten Drossel (124), die den Durchfluss (QR3) des von der zweiten Kammer (34) stammenden Fluids begrenzt, erhalten wird.

17. Vorrichtung nach irgend einem der Ansprüche 7 bis 16, ***dadurch gekennzeichnet,* dass** bei der Versorgung der zweiten Kammer (32) des ersten Zylinders (6) der in dieser Letzteren herrschende Versorgungsdruck (P1) insbesondere auf die große Steuerfläche (69) ausgeübt wird, wodurch in entgegengesetzter Richtung zum Rückholelement (62) auf den zweiten Verteiler (42) eingewirkt werden kann.

18. Vorrichtung nach Anspruch 17, ***dadurch gekennzeichnet,* dass** der in der zweiten Kammer (32) des ersten Zylinders (6) herrschende Versorgungsdruck (P1) des Weiteren auf:
- die kleine Steuerfläche (65) des ersten Verteilers (41);
- die kleine Steuerfläche (66) des zweiten Verteilers (42);
- die kleine Steuerfläche (67) des dritten Verteilers (43);
- die große Steuerfläche (68), wodurch in entgegengesetzter Richtung zum Rückholelement (61) des ersten Verteilers (41) auf Letzteren eingewirkt werden kann; und
- die große Steuerfläche (70), wodurch in entgegengesetzer Richtung zum Rückholelement (63) des dritten Verteilers (43) auf Letzteren eingewirkt werden kann,
ausgeübt wird.

19. Vorrichtung nach irgend einem der Ansprüche 1 bis 18, ***dadurch gekennzeichnet,* dass** der mit dem zweiten Zylinder (7) in Verbindung stehende zweite Block (38) vom ersten Block (36; 36A) lösbar ist und unabhängig funktionieren kann.

20. Vorrichtung nach Anspruch 19, ***dadurch gekennzeichnet,* dass** eine vierte Drossel (125) vorgesehen ist, die den Durchfluss (QR3) des von der zweiten Kammer (34) des zweiten Zylinders (7) stammenden Fluids begrenzen soll.

21. Vorrichtung nach den Ansprüchen 16 und 20, ***dadurch gekennzeichnet,* dass** eine Auswahlvorrichtung (145) vorgesehen ist, die es gestattet, die dritte Drossel (124) oder die vierte Drossel (125) auszuwählen.

22. Vorrichtung nach irgend einem der Ansprüche 1 bis 21, ***dadurch gekennzeichnet,* dass** ein Mittel vorgesehen ist, das es gestattet, eine der Kammern (31; 32) des ersten Zylinders (6) und/oder eine der Kammern (33; 34) des zweiten Zylinders (7) direkt zu versorgen.

23. Landmaschine mit zwei Zylindern (6, 7) und einer Vorrichtung (9; 9A), die die Betätigung der Zylinder (6, 7) gestattet, ***dadurch gekennzeichnet,* dass** die Vorrichtung (9; 9A) eine Vorrichtung nach irgend einem der Ansprüche 1 bis 22 ist.

24. Pflug, der:
- eine Kupplungskonstruktion (2), die mit einem Motorfahrzeug (4) verbunden werden soll;
- eine Tragkonstruktion (5), die einerseits um ein Gelenk (12) mit einer im Wesentlichen horizontalen und in Fahrtrichtung (13) ausgerichteten Längsachse (12A) geschwenkt und andererseits bezüglich der Kupplungskonstruktion (2) seitlich verschoben werden kann;
- mit der Tragkonstruktion (5) verbundene Pflugkörper (10);
- einen ersten Zylinder (6), der die seitliche Verschiebung der Tragkonstruktion (5) bezüglich der Kupplungskonstruktion (2) gestattet;
- einen zweiten Zylinder (7), der das Schwenken der Tragkonstruktion (5) um das Gelenk (12) gestattet; und
- eine Vorrichtung (9; 9A), die die Betätigung des ersten und des zweiten Zylinders (6, 7) gestattet,
umfasst, ***dadurch gekennzeichnet,* dass** die Vorrichtung (9; 9A) eine Vorrichtung nach irgend einem der Ansprüche 1 bis 22 ist.

## Claims

1. Device for permitting the control of two rams (6, 7) each containing a first and a second chamber (31, 32; 33, 34) comprising:
- two blocks (36; 36A; 38) in communication with the rams (6, 7);
- a circuit (39) comprising three distributors (41, 42, 43; 130) and control pipes (45, 46, 47, 48, 49, 50, 51, 52, 53; 134) to control the said distributors (41, 42, 43; 130);
- a first block (36; 36A) in communication with the first ram (6) and a second block (38) in communication with the second ram (7) and the first block (36; 36A), a first and a second distributor (41, 42) extending inside of the first block (36; 36A) and a third distributor (43) extending inside of the second block (38),
the distributors (41, 42, 43; 130) are controlled chronologically as a function of the pressures (P1, PR1, PRN, PR2, PR3, P2) which exist in the circuit (39) by means of the control pipes (45, 46, 47, 48, 49, 50, 51, 52, 53; 134) which tap off the pressure at different points of the said circuit (39) to enable the successive supply of:
- the first chamber (31) of the first ram (6) allowing the lengthening of the said first ram (6) by means of a fourth pipe (79) communicating with the said first distributor (41), which is supplied via a hydraulic generator (37) of a motor vehicle (4) by means of a first pipe (75), the said first distributor (41) communicating with the second chamber (32) of the said first ram (6) by means of a fifth pipe (80);
- the second chamber (34) of the second ram (7) allowing the shortening of the said second ram (7) by means of a sixteenth pipe (103) communicating with the said third distributor (43), which is supplied by the said first distributor (41) by means of a sixth pipe (81);
- the first chamber (33) of the said second ram (7) allowing the lengthening of the said second ram (7) by means of a tenth pipe (92) communicating with the said third distributor (43), the said third distributor (43) being supplied by the said first distributor (41) via the said sixth pipe (81); and
- the second chamber (32) of the said first ram (6) allowing the shortening of the said first ram (6) by means of the said fifth pipe (80) communicating with the said second distributor (42);
***characterized in* that** when the said first chamber (33) is supplied, the second distributor (42) is supplied by the said third distributor (43) via a tenth pipe (92).

2. Device according to Claim 1, ***characterized in* that** the first chamber (31) of the first ram (6) can only be supplied by the first distributor (41).

3. Device according to Claim 1 or 2, ***characterized in* that** the first chamber (33) and the second chamber (34) of the second ram (7) are in particular supplied by the third distributor (43).

4. Device according to any one of Claims 1 to 3, ***characterized in* that** the second chamber (32) of the first ram (6) is in particular supplied by the second distributor (42).

5. Device according to any one of Claims 1 to 4, ***characterized in* that** the third distributor (43) is supplied by the first distributor (41).

6. Device according to any one of Claims 1 to 5, ***characterized in* that** each distributor (41, 42, 43) is designed to occupy two distinct positions:
- an initial position (55, 56, 57); and
- another position (58, 59, 60);
and **in that** it is in addition controlled by a return element (61, 62, 63) designed to maintain the said distributor (41, 42, 43) in or return it to its initial position (55, 56, 57).

7. Device according to Claim 6, ***characterized in* that** each distributor (41, 42, 43) is controlled by three control pipes (45, 46, 47, 48, 49, 50, 51, 52, 53), the first control pipe (45, 48, 51) allowing to act on the distributor (41, 42, 43) in the opposite direction to the return element (61, 62, 63) by means of a small control surface (65, 66, 67), the second control pipe (46, 49, 52) allowing to act on the distributor (41, 42, 43) in the opposite direction to the return element (61, 62, 63) by means of a large control surface (68, 69, 70), the third control pipe (47, 50, 53) allowing to act on the distributor (41, 42, 43) in the same direction as the return element (61, 62, 63) by means of a large control surface (71, 72, 73).

8. Device according to Claim 7, ***characterized in* that** when the first chamber (31) of the first ram (6) is supplied, the supply pressure (P1) existing **in that** chamber is exerted on the small control surface (65) of the first distributor (41) whereas the return pressure (PR1) existing in the second chamber (32) of the said first ram (6) is exerted on the large control surface (71) allowing to act on the said first distributor (41) in the same direction as the corresponding return element (61).

9. Device according to Claim 8, ***characterized in* that** the return pressure (PR1) existing in the second chamber (32) of the first ram (6) is greater than the normal return pressure (PRN) when the said first ram (6) lengthens or shortens and is obtained by means of a first flow restrictor (122) limiting the flow of fluid (QR1) from the said second chamber (32).

10. Device according to any one of Claims 7 to 9, ***characterized in* that** when the second chamber (34) of the second ram (7) is supplied, the supply pressure (P1) existing in this second chamber is in particular exerted on the small control surface (67) of the third distributor (43) whereas the return pressure (PR2) existing in the first chamber (33) of the said second ram (7) is in particular exerted on the large control surface (73) allowing to act on the said third distributor (43) in the same direction as the corresponding return element (63).

11. Device according to Claim 10, ***characterized in* that** the supply pressure (P1) existing in the second chamber (34) of the second ram (7) is also exerted on the small control surface (65) of the first distributor (41) and on the large control surface (68) allowing to act on the said first distributor (41) in the opposite direction to its return element (61), whereas the return pressure (PR2) existing in the first chamber (33) of the said second ram (7) is also exerted on the small control surface (66) of the second distributor (42).

12. Device according to Claim 10 or 11, ***characterized in* that** the return pressure (PR2) existing in the first chamber (33) of the second ram (7) is greater than the normal return pressure (PRN) when the said second ram (7) lengthens or shortens and is obtained by means of a second flow restrictor (123) limiting the rate of flow of fluid (QR2) from the said first chamber (33).

13. Device according to Claim 4 and any one of Claims 7 to 12, ***characterized in* that** the second distributor (42), allowing the supply to one of the chambers (31, 32) of the first ram (6), is controlled by the second ram (7).

14. Device according to Claim 13, ***characterized in* that** when the first chamber (33) of the second ram (7) is supplied, the supply pressure (P1) existing **in that** chamber in particular exerts on the small control surface (66) of the second distributor (42) whereas the return pressure (PR3) existing in the second chamber (34) of the said second ram (7) exerts on the large control surface (72) allowing to act on the said second distributor (42) in the same direction as the corresponding return element (62).

15. Device according to Claim 14, ***characterized in* that** the supply pressure (P1) existing in the first chamber (33) of the second ram (7) also exerts on:
- the small control surface (65) of the first distributor (41);
- the small control surface (67) of the third distributor (43);
- the large control surface (68) allowing to act on the first distributor (41) in the opposite direction to its return element (61); and
- the large control surface (70) allowing to act on the third distributor (43) in the opposite direction to its return element (63).

16. Device according to Claims 14 and 15, ***characterized in* that** the return pressure (PR3) existing in the second chamber (34) of the second ram (7) is greater than the normal return pressure (PRN) when the said second ram (7) lengthens or shortens and is obtained by means of a third flow restrictor (124) limiting the rate of flow of fluid (QR3) from the said second chamber (34).

17. Device according to any one of Claims 7 to 16, ***characterized in* that** when the second chamber (32) of the first ram (6) is supplied, the supply pressure (P1) existing in this second chamber in particular exerts on the large control surface (69) allowing to act on the second distributor (42) in the opposite direction to its return element (62).

18. Device according to Claim 17, ***characterized in* that** the supply pressure (P1) existing in the second chamber (32) of the first ram (6) also exerts on:
- the small control surface (65) of the first distributor (41);
- the small control surface (66) of the second distributor (42);
- the small control surface (67) of the third distributor (43);
- the large control surface (68) allowing to act on the first distributor (41) in the opposite direction to its return element (61);
- the large control surface (70) allowing to act on the third distributor (43) in the opposite direction to its return element (63).

19. Device according to any one of Claims 1 to 18, ***characterized in* that** the second block (38) in communication with the second ram (7) is detachable from the first block (36; 36A) and can operate autonomously.

20. Device according to Claim 19, ***characterized in* that** a fourth flow restrictor (125) is provided to limit the rate of flow of fluid (QR3) from the second chamber (34) of the second ram (7).

21. Device according to Claims 16 and 20, ***characterized in* that** a selection device (145) is provided which allows to select the third flow restrictor (124) or the fourth flow restrictor (125).

22. Device according to any one of Claims 1 to 21, ***characterized in* that** a means is provided which allows to supply directly one of the chambers (31; 32) of the first ram (6) and/or one of the chambers (33; 34) of the second ram (7).

23. Agricultural machine comprising two rams (6, 7) and a device (9; 9A) permitting to control the said rams (6, 7), ***characterized in* that** the device (9; 9A) is a device according to any one of Claims 1 to 22.

24. Plough comprising:
- a hitching structure (2) designed to be linked to a motor vehicle (4);
- a carrying structure (5) that can, on the one hand, be pivoted around an articulation (12) the longitudinal axis (12A) of which is substantially horizontal and directed in the direction of travel (13) and, on the other hand, be moved laterally relative to the said hitching structure (2);
- plough bodies (10) connected to the carrying structure (5);
- a first ram (6) allowing to move the carrying structure (5) laterally relative to the said hitching structure (2);
- a second ram (7) allowing to pivot the carrying structure (5) around the articulation (12); and
- a device (9; 9A) allowing to control the first and second rams (6, 7),
***characterized in* that** the device (9; 9A) is a device according to any one of Claims 1 to 22.
